(19) Europäisches Patentamt / European Patent Office / Office européen des brevets

(11) **EP 3 182 318 B1**

(12) **EUROPÄISCHE PATENTSCHRIFT**

(45) Veröffentlichungstag und Bekanntmachung des Hinweises auf die Patenterteilung:
**16.06.2021 Patentblatt 2021/24**

(51) Int Cl.:
**H04L 9/32** *(2006.01)* **G06F 21/33** *(2013.01)*
**G06F 21/35** *(2013.01)* **G06F 21/64** *(2013.01)*
**H04L 29/06** *(2006.01)* **H04L 9/30** *(2006.01)*

(21) Anmeldenummer: **16203681.8**

(22) Anmeldetag: **13.12.2016**

(54) **SIGNATURGENERIERUNG DURCH EIN SICHERHEITSTOKEN**

SIGNATURE GENERATION BY MEANS OF A SECURITY TOKEN

GÉNÉRATION DE SIGNATURE AU MOYEN D'UN JETON DE SÉCURITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.12.2015 DE 102015225373**

(43) Veröffentlichungstag der Anmeldung:
**21.06.2017 Patentblatt 2017/25**

(73) Patentinhaber:
- **Bundesdruckerei GmbH**
  **10969 Berlin (DE)**
- **CV Cryptovision GmbH**
  **45886 Gelsenkirchen (DE)**

(72) Erfinder:
- **Mai, Thomas**
  **46236 Bottrop (DE)**
- **Lohoff, Ansgar**
  **45879 Gelsenkirchen (DE)**
- **Müller, Frank**
  **10407 Berlin (DE)**
- **Scholze, Steffen**
  **13469 Berlin (DE)**
- **Dr. Schwan, Matthias**
  **10437 Berlin (DE)**
- **Hesse, Danny**
  **10785 Berlin (DE)**
- **Dr. Filzhuth, Elke**
  **12359 Berlin (DE)**
- **Dr. Wirth, Klaus-Dieter**
  **12683 Berlin (DE)**

(74) Vertreter: **Richardt Patentanwälte PartG mbB**
**Wilhelmstraße 7**
**65185 Wiesbaden (DE)**

(56) Entgegenhaltungen:
- **Bsi ET AL: "Advanced Security Mechanisms for Machine Readable Travel Documents and eIDAS Token", Part 3 - Common Specifications Version 2.20, 3. Februar 2015 (2015-02-03), XP055258090, Gefunden im Internet: URL:https://www.bsi.bund.de/SharedDocs/Dow nloads/EN/BSI/Publications/TechGuidelines/ TR03110/BSI_TR-03110_Part-3-V2_2.pdf?__blo b=publicationFile&v=1 [gefunden am 2016-03-14]**
- **"Advanced Security Mechanisms for Machine Readable Travel Documents and eIDAS Token - Part 2", , 16. Dezember 2014 (2014-12-16), XP055257174, Gefunden im Internet: URL:https://www.bsi.bund.de/EN/Publication s/TechnicalGuidelines/TR03110/BSITR03110.h tml [gefunden am 2016-03-10]**
- **Bad Dryer: "SHA-2 - Wikipedia", Wikipedia.org, 9. Dezember 2005 (2005-12-09), XP055362293, Gefunden im Internet: URL:https://en.wikipedia.org/w/index.php?t itle=SHA-2&oldid=694505584 [gefunden am 2017-04-06]**
- **Bsi: "Elliptic Curve Cryptography", , 28. Juni 2012 (2012-06-28), XP055362584, Gefunden im Internet: URL:https://www.bsi.bund.de/SharedDocs/Dow nloads/EN/BSI/Publications/TechGuidelines/ TR03111/BSI-TR-03111_pdf.pdf;jsessionid=BE A61004DB0EB5998B41DA8DE81999EA.2_cid36 0?__ blob=publicationFile&v=1 [gefunden am 2017-04-06]**

**Beschreibung**

Die Erfindung betrifft ein Verfahren zur Generierung einer Signatur durch ein Sicherheitstoken, ein Sicherheitstoken sowie ein Verfahren und Datenverarbeitungssystem zur Verifikation der besagten Signatur.

Aus dem Stand der Technik sind verschiedene Verfahren zur Signaturgenerierung bekannt.

Auf Smartcards werden häufig Daten gespeichert oder im Rahmen verschiedener Operationen generiert, die dann ausgelesen werden sollen. Typischerweise werden Daten, die z.B. statisch auf der Karte gespeichert sein können, nacheinander aus der Smartcard ausgelesen und an einen Empfänger, z.B. ein Lesegerät eines Terminals, übertragen. Der Prozessor der Smartcard generiert eine Signatur über die Gesamtheit der besagten ausgelesenen und übertragenen Daten.

Das Dokument BSI, "Advanced Security Mechanisms for Machine Readable Travel Documents and eIDAS Token", Part 3 - Common Specifications Version 2.20, (20150203), URL: https://www.bsi.bund.de/SharedDocs/Downloads/EN/BSI/Publications/TechGuidelines/TR03110/BSI_TR-03110_Part-3-V2_2.pdf?_blob=publicationFile&v=1, (20160314), XP055258090 und das Dokument BSI "Advanced Security Mechanisms for Machine Readable Travel Documents and eIDAS Token - Part 2", (20141216), URL: https://www.bsi.bund.de/EN/Publications/Technical-Guidelines/TR03110/BSITR0311 0.html, (20160310), XP055257174, beschreiben Verfahren und Protokolle zur Verwendung von maschinenlesbaren Reisedokumenten. Dabei werden auf den maschinenlesbaren Reisedokumenten abgespeicherte Daten signiert.

Der Wikipedia-Artikel "SHA-2", Wikipedia.org, (20051209), URL: https://en.wikipedia.Org/w/index.php?title=SHA-2&oldid=694505584, (20170406), XP055362293, beschreibt das SHA-2-Hashverfahren, bei dem eine zu hashende Nachricht abschnittsweise Hashberechnungen unterzogen wird. Das Dokument BSI, "Elliptic Curve Cryptography", (20120628), URL: https://www.bsi.bund.de/SharedDocs/Downloads/EN/BSI/Publications/TechGuidelines/TR03111/BSI-TR-03111_pdf.pdf;jsessionid=BEA61004DB0EB5998B41DA8DE81999EA.2_cid360?_ blob=publicationFile&v=1, (20170406), XP055362584, beschreibt Verfahren aus der Elliptischen-Kurven-Kryptographie, unter anderem die Verwendung von Schnorr-Signaturen.

Ein Problem, das bei der Signaturgenerierung durch Smartcards auftritt, ist jedoch, dass diese oft zu viel Zeit und/oder Speicherplatz in Anspruch nimmt. Der Mikroprozessor von Smartcards weist nur eine sehr begrenzte Rechenkapazität auf und auch die karteneigenen Speicherressourcen sind sehr begrenzt. In sehr zeitkritischen Anwendungen und/oder bei Verwendung leistungsschwacher Smartcards ist die Generierung einer Signatur durch die Smartcard somit in manchen Fällen ganz unmöglich oder nicht sinnvoll, was die Sicherheit reduzieren kann.

Der Erfindung liegt demgegenüber die Aufgabe zugrunde, ein verbessertes Verfahren zum Generieren einer Signatur durch ein Sicherheitstoken zu schaffen, sowie ein entsprechendes Sicherheitstoken, Verfahren und System zur Signatur-Verifikationsverfahren.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben. Die im Folgenden aufgeführten Ausführungsformen sind frei miteinander kombinierbar, sofern sie sich nicht gegenseitig ausschließen.

Als "Sicherheitstoken" wird im Folgenden jeglicher Datenträger bezeichnet, welcher einen Prozessor, z.B. einen Mikrochip mit einem Mikroprozessor, und eine mit diesem verbundene Schnittstelle aufweist und mit einem geeigneten Lesegerät Daten austauschen kann. Bei dem Sicherheitstoken kann es sich um ein elektronisches Wert- oder Sicherheitsdokument, wie zum Beispiel um ein ID-Dokument, handeln.

Ein ID-Dokument kann z.B. ein Ausweisdokument, wie zum Beispiel einen Personalausweis, Reisepass, Führerschein, Fahrzeugbrief, Fahrzeugschein oder Firmenausweis, sein. Bei dem Wertdokument kann es sich z.B. um ein Zahlungsmittel, wie zum Beispiel eine Banknote oder eine Kreditkarte handeln. Das Dokument kann auch ein sonstiger Berechtigungsausweis, zum Beispiel eine Eintrittskarte, ein Fahrschein, insbesondere ein Electronic-Ticket, einen Frachtbrief, ein Visum oder dergleichen, sein. Der Dokumentkörper des Dokuments kann buchartig ausgebildet sein, wie dies zum Beispiel bei einem Reisepass der Fall sein kann. Die Schnittstelle kann als kontaktbehaftete oder kontaktlose Schnittstelle ausgebildet sein. Je nach Ausführungsform kann das Dokument zum Beispiel kunststoff- und/oder papierbasiert sein. Das Sicherheitstoken kann z.B. als Chipkarte, als USB-Stick oder als portables Bluetooth-Gerät ausgebildet sein.

Unter einem "Lesegerät" wird im Folgenden ein Datenverarbeitungsgerät verstanden, welches mit dem Sicherheitstoken Daten austauschen kann, um eine Authentifikation des Sicherheitstoken gegenüber dem Lesegerät und/oder eine Authentifizierung des Lesegeräts gegenüber dem Sicherheitstoken zu ermöglichen. Nach Ausführungsformen kann das "Lesegerät" eine kryptografische Funktion zur Signierung und/oder Signaturprüfung beinhalten. Optional kann das Lesegerät eine Anzeigevorrichtung aufweisen und damit als Terminal fungieren. Das Lesegerät kann aber auch mit einem externen Terminal oder mit einem Nutzer-Computersystem verbunden sein. Insbesondere kann das Lesegerät Funktionalitäten implementieren, wie sie an sich für Lesegeräte maschinenlesbarer Reisedokumente (MRTD) bekannt sind, insbesondere kryptografische Protokolle, wie zum Beispiel ein Basic Access Control (BAC) und/oder ein Extended Access Control (EAC) Protokoll.

Nach manchen Ausführungsformen kann das Lesegerät dazu ausgebildet sein, Daten von dem Sicherheitstoken zu lesen. In manchen Anwendungsszenarien ist es notwendig, sicherzustellen, dass ausschließlich ein berechtigtes Lesegerät auf die in dem Sicherheitstoken gespeicherten Daten zugreifen kann, so dass sich das Lesegerät vor dem Auslesen dieser Daten gegenüber dem Sicherheitstoken authentisieren muss. Vorzugsweise beinhaltet die Authentifizierung den Nachweis, dass der Eigentümer des Sicherheitstokens das Sicherheitstoken dem Lesegerät willentlich zum Auslesen der Daten verfügbar gemacht hat. Dies kann zum Beispiel dadurch geschehen, dass das Lesegerät Daten, die auf der Oberfläche des Sicherheitstokens sichtbar und vom Lesegerät optisch erfasst wurden, an das Sicherheitstoken übermittelt werden als Nachweis, dass der Nutzer das Sicherheitstoken (und die darauf befindlichen optisch erfassbaren Daten) dem Lesegerät willentlich gezeigt hat. Alternativ kann z.B. auch ein vom Nutzer in das Lesegerät eingegebenes Geheimnis zur Authentifizierung des Lesegerätes gegenüber dem Sicherheitstoken verwendet werden.

Ein Terminal ist ein Gerät, das mit einem Sicherheitstoken Daten austauschen kann und optional über eine Nutzerschnittstelle, zum Beispiel Tastatur und/oder ein Display, verfügt. Ein Terminal kann ein Lesegerät mit einer Datenaustausch-Schnittstelle beinhalten oder mit diesem verbunden sein. Die Datenaustausch-Schnittstelle kann z.B. eine kontaktbehaftete Schnittstelle, eine NFC ("Near Field Communication")-Schnittstelle oder eine Bluetooth-Schnittstelle sein.

Unter einem "Dienst-Computersystem" wird im Folgenden ein Computersystem verstanden, das einen Dienst bereitstellt. Der Dienst kann verschiedenste Hardware- und/oder softwarebasierte Funktionen umfassen, wie etwa die Gewährung eines Zugriffs auf geschützte Gebäude oder Gegenstände oder auf Softwarefunktionen oder Daten. Der Dienst kann ein Online-Dienst, insbesondere ein Clouddienst sein. Das Dienst-Computersystem stellt seinen Dienst jedoch nur an Personen zur Verfügung, die sich gegenüber dem Dienst-Computersystem authentifiziert haben, also dem Dienst-Computersystem einen hinreichend glaubwürdigen Beweis der eigenen digitalen Identität bereitgestellt haben.

Unter einem "Identity(ID)-Provider-Computersystem" wird im Folgenden ein Computersystem verstanden, welches eine digitale Identität eines Nutzers einem Dritten gegenüber bestätigt und/oder diese digitale Identität einem Dritten bereitstellt. Dieser Dritte kann ein weiteres Computersystem sein, das mit dem ID-Provider-Computersystem über ein Netzwerk verbunden ist, z.B. ein Dienst-Computersystem.

Ein "Attributwert" ist ein Datenwert für ein Attribut und kann einem Nutzer zugeordnet sein.

Unter einem "Nutzer-Computersystem" wird im Folgenden ein Datenverarbeitungssystem, z.B. ein Desktop-PC, ein Notebook oder ein Smartphone verstanden, welches es dem Nutzer erlaubt, einen Dienst, der von einem Dienst-Computersystem bereitgestellt wird, über ein Netzwerk, z.B. das Internet, anzufordern.

Ein "Revozierungs-Server" ist ein Datenverarbeitungssystem, welches eine Revozierungsliste verwaltet und über ein Netzwerk öffentlich zugänglich abrufbar macht. Eine Revozierungsliste ist eine Liste von Identifikatoren all derjenigen Sicherheitstoken, welche als unsicher oder nicht mehr gültig anzusehen sind, z.B. aufgrund von Zeitablauf oder aufgrund einer Verlustmeldung durch den Besitzer oder einer Inaktivierung durch den Herausgeber. Bei den Identifikatoren kann es sich um öffentliche kryptographische Schlüssel handeln, die den jeweiligen Sicherheitstoken spezifisch zugeordnet sind, oder sonstige Datenwerte, z.B. Nummern, die ein Sicherheitstoken eindeutig identifizieren. Nach Ausführungsformen verwaltet der Revozierungs-Server mehrere Revozierungslisten, wobei jede Revozierungsliste spezifisch einem Sektor zugeordnet ist und wobei es sich bei den in den Revozierungslisten befindlichen Identifikatoren um sektorspezifische Identifikatoren, auch "Pseudonyme" genannt, handelt.

Ein Revozierungs-Terminal ist ein Terminal, das (zumindest auch) dazu ausgebildet ist, anhand eines empfangenen Identifikators eines Sicherheitstoken zu prüfen, ob dieses Sicherheitstoken noch gültig ist, und andernfalls beispielsweise einen öffentlichen kryptographischen Schlüssel, der diesem Sicherheitstoken zugeordnet ist, zurückzuziehen, nicht mehr zur Verfügung zu stellen und/oder anfragenden Systemen mitzuteilen, dass dieser öffentliche Schlüssel nicht als sicher anzusehen ist. Dies kann z.B. notwendig sein, wenn ein solcher Schlüssel kompromittiert wurde bzw. der Verdacht besteht, dass der Schlüssel nicht mehr sicher ist. Der revozierte Schlüssel wird von einer Zertifizierungsstelle in die Revozierungsliste, auch Zertifikatsperrliste (CRL) genannt, aufgenommen, die zur Gültigkeitsprüfung durch das Revozierungs-Terminal einsehbar ist.

Eine "Hashfunktion" ist ein Verfahren zur Komprimierung von Daten mittels einer Einwegfunktion, so dass die ursprünglichen Daten nicht rückrechenbar sind. Die Hashfunktion liefert für einen Eingabewert beliebiger Länge einen Ausgabewert von vorzugsweise fester Länge und ist so beschaffen, dass eine Änderung der Eingangsdaten mit sehr hoher Wahrscheinlichkeit Auswirkungen auf den berechneten Hashwert (das heißt den Ausgabewert) hat. Typische Vertreter der Hash-Algorithmen sind z.B. SHA-1, SHA-256 oder SHA-512. Das Ergebnis einer Hashfunktion ist der Hashwert, der oft auch als digitaler Fingerabdruck des Eingabewertes bezeichnet wird. Mathematisch ist diese Funktion nicht injektiv (linkseindeutig) und nicht notwendigerweise surjektiv (rechtstotal).

Eine "Zwischenwertfunktion" einer Hashfunktion ist eine Kompressionsfunktion, die die Bedingung erfüllt, dass sie bei iterativer Anwendung auf eine Sequenz zuvor noch nicht verarbeiteter Teile einer Nachricht schließlich im letzten Schritt, also bei der Verarbeitung des letzten noch nicht verarbeiteten Teils der Nachricht, einen Wert zurückliefert, der identisch zu dem Wert ist, den die Hashfunktion bei direkter Anwendung auf die gesamte Nachricht ergeben hätte. Die Zwischenwertfunktion verwendet dabei bei jeder Ausführung das Ergebnis der letzten Ausführung und den nächsten der noch nicht verarbeiteten Teile in der Sequenz als Eingabe und liefert einen als "Zwischenwert" ("chaining value") bezeichneten Ergebniswert als Ausgabe. Die allerletzte Anwendung der Zwischenwertfunktion, die auf dem letzten noch nicht verarbeiteten Teil der Nachricht und dem bei der vorhergehenden Anwendung der Zwischenwertfunktion erhaltenen Zwischenergebnis erfolgt, und die den besagten Hashwert als Ergebnis für die gesamte Nachricht als Ergebnis liefert, wird im Folgenden als Abschlussfunktion bezeichnet. Unter einer "Nachricht" ist hier ein Datenwert zu verstehen, der z.B. aus ein oder mehreren Attributwerten, insbesondere nutzerspezifischen Attributwerten, oder sonstigen Daten besteht.

Eine "Abschlussfunktion" ist eine einmalig für den letzten noch nicht erarbeiteten Teil der Nachricht durchzuführende Zwischenwertfunktion. Nach manchen Ausführungsformen ist die Abschlussfunktion in mathematischer Hinsicht identisch zu der Zwischenwertfunktion. Nach anderen Ausführungsformen beinhaltet die Abschlussfunktion aber noch zusätzliche Rechenoperationen, die auch als "Finalisierungsoperationen" bezeichnet werden können. Diese zusätzlichen Rechenoperationen der Abschlussfunktion können verschiedene Zwecke erfüllen. Zum Beispiel kann das Ergebnis der iterativen Anwendung der Zwischenwertfunktion noch einmal weiter komprimiert werden, die Länge des final zurückgegebenen Hashwertes kann auf eine fixe Länge beschnitten oder verlängert werden.

Unter "Konkatenation" wird hier eine Aneinanderreihung von Datenwerten verstanden, z.B. die Aneinanderreihung von Datenwerten um eine Bitfolge zu erzeugen.

Eine "pseudonymisierte Signatur", "pseudonyme Signatur" oder "blinde Signatur" erlaubt es einer Signatur-Prüfeinheit nicht, die Signatur einem bestimmten Sicherheitstoken und damit einer bestimmten Person zuzuordnen. Allenfalls eine Zuordnung der Signatur zu einer Gruppe von Sicherheitstoken bzw. Personen ist möglich, z.B. zu einer Gruppe von Sicherheitstoken des gleichen Herausgebers des Sicherheitstokens. Bei der Personengruppe kann es sich um die Angestellten eines bestimmten Unternehmens oder die Angestellten einer bestimmten Abteilung dieses Unternehmens handeln. Pseudonyme Signaturen ermöglichen es einer Signatur-Prüfeinheit, den signierten Datenwert auf Validität hin zu prüfen, nicht jedoch eine Identifizierung des Sicherheitstokens, das die Signatur erzeugt hat. Nach Ausführungsformen umfasst eine Prüfung auf Validität eines signierten Datenwerts eine Prüfung auf Authentizität (d.h. die Zugehörigkeit zu einer Person oder einem Sicherheitstoken oder einer Gruppe von Sicherheitstoken) und die Integrität (d.h. die Unverfälschtheit) des geprüften Datenwerts. Zu beachten ist, dass ein sektorspezifisches "Pseudonym" durchaus eindeutig für ein bestimmtes Sicherheitstoken oder eine Person sein kann, allerdings nur für ein Terminal eines Sektors, für welchen das Pseudonym generiert wurde. Eine "pseudonyme Signatur" erlaubt dagegen eine Signaturprüfung ohne dadurch das Token, das die Signatur generierte, zu identifizieren.

Ein "Sektor" ist ein Anwendungskontext für die Generierung und Prüfung einer Signatur, wobei der Anwendungskontext z.B. zu einem bestimmten Dienstanbieter oder einem bestimmten Terminaltyp korrespondiert. Beispielsweise können Terminaltypen wie "Flughafenterminal" oder "Zugangskontroll-Terminal für Firmengelände", "Revozierungsterminal" etc. einen solchen Anwendungskontext darstellen. Es ist möglich, dass ein Terminal mehreren Sektoren angehört.

Ein "statischer Schlüssel" ist ein Verschlüsselungsschlüssel, der vor den verarbeitenden APDUs existiert und der während und nach der Verarbeitung der APDUs besteht. Ein statischer Schlüssel existiert also auch noch nach Unterbrechung der Energieversorgung des Sicherheitstokens ("power-off").

In einem Aspekt betrifft die Erfindung ein Verfahren zur Generierung einer Signatur für eine Nachricht durch einen Prozessor eines Sicherheitstokens. Das Verfahren umfasst:

- sequentielles Bereitstellen von Teilen der Nachricht durch den Prozessor;
- während der sequentiellen Bereitstellung, Anwenden einer Zwischenwertfunktion oder einer Abschlussfunktion einer Hashfunktion auf jedes der Teile der Nachricht unmittelbar nach der Bereitstellung des besagten Teils zur schrittweisen Berechnung eines ersten Hashwerts, wobei der erste Hashwert identisch ist mit einem Wert, der bei Anwendung der Hashfunktion auf die gesamte Nachricht erhalten worden wäre, durch den Prozessor;
- Bereitstellen von ein oder mehreren Datenwerten durch den Prozessor;
- nach Berechnung des ersten Hashwertes, Generierung eines konkatenierten Wertes durch den Prozessor durch Konkatenierung der ein oder mehreren Datenwerte und des berechneten ersten Hashwertes, wobei die Nachricht von der Konkatenierung ausgeschlossen wird;
- Ausgabe des zweiten Hashwerts durch den Prozessor zur Verwendung des zweiten Hashwerts als die Signatur der Nachricht oder als ein Bestandteil dieser Signatur,
  ferner mit
- Freigabe von Arbeitsspeicher (118) des Sicherheitstokens, der durch jedes der Teile der Nachricht belegt wurde, unmittelbar nach der Anwendung der Zwischenwertfunktion oder der Abschlussfunktion auf diesen Teil der Nachricht; oder
- Freigabe von Arbeitsspeicher (118) des Sicherheitstokens, der durch jedes der Teile der Nachricht belegt wurde, nach der Anwendung der Zwischenwertfunktion oder der Abschlussfunktion auf diesen Teil der Nachricht und unmittelbar nachdem dieser Teil der Nachricht über eine Schnittstelle (119.1) des Sicherheitstokens ausgegeben wurde.

Dies kann vorteilhaft sein, da kein zweifaches Generieren der Nachricht (zum Zwecke der Übertragung an einen Empfänger und zum Zwecke der Signierung der gesamten, bereits ausgegebenen Nachricht) erforderlich ist. Die Nachricht wird nur einmal - und zwar sequentiell in Teilen - bereitgestellt und dabei parallel ein Zwischenwert für jedes dieser Teile berechnet. Dies reduziert die Auslastung des Mikroprozessors des Sicherheitstokens.

Außerdem ist kein Caching der gesamten Nachricht notwendig, es genügt das temporäre Vorhalten des für den zuletzt bereitgestellten Teil berechneten Zwischenwertes so lange, bis der nächste Zwischenwert berechnet worden ist. Dies reduziert den Speicherverbrauch in der Chipkarte, sodass auch eine geringe Menge an Speicher (z.B., Schreib-Lese-Speicher, insbesondere RAM) ausreichend ist um große Nachrichten zu signieren. Beispielsweise umfasst der erste Hashwert und auch jeder der für die einzelnen Teile berechnete Zwischenwert, z.B. bei Verwendung einer Hashfunktion wie SHA-256, nur 32 Byte. Dies kann deutlich unter dem Speicherverbrauch einer Nachricht, die oftmals im Bereich von mehreren Kilobyte oder mehr liegen kann, liegen.

Es ist somit nicht mehr erforderlich, dass die Nachricht erst für eine erste Übertragung zusammengestellt oder erstellt wird, und dann zur Berechnung der Signatur ein zweites Mal zusammengestellt oder erstellt wird oder dass die bereits bereitgestellte Nachricht in ihrer Gesamtheit für den Zweck der Signaturerzeugung zwischengespeichert wird.

Dabei wird auch das Problem vermieden, dass die Größe des für die Speicherung der Nachricht erforderlichen Speichers vom Umfang der Gesamtheit der zu signierenden Nachricht abhängt und vorab oftmals nur schwer abgeschätzt werden kann, sodass in bisher verwendeten Signaturverfahren oftmals mehr Speicher reserviert wurde als tatsächlich benötigt wurde, was das Problem Speicherknappheit bisher weiter erhöht hatte.

Nach Ausführungsformen reserviert der Prozessor des Sicherheitstokens für die Berechnung des ersten Hashwerts einen Speicherbereich im Arbeitsspeicher, der hinreichend groß ist, um zumindest einen der Teile der Nachricht und zumindest einen der Zwischenwerte zu speichern, der jedoch kleiner ist als die Größe der gesamten Nachricht. Dies kann vorteilhaft sein, da dadurch weniger Arbeitsspeicher belegt wird.

Nach Ausführungsformen handelt es sich bei der Hashfunktion, die den ersten und/oder zweiten Hashwert generiert, um eine kryptographische Hashfunktion. Eine kryptographische Hashfunktion ist eine spezielle Form einer Hashfunktion, welche kollisionsresistent oder eine Einwegfunktion oder beides ist. Somit kann bewirkt werden, dass ein bestimmter Hashwert das Ergebnis eines und nur eines ursprünglichen Klartextes ist.

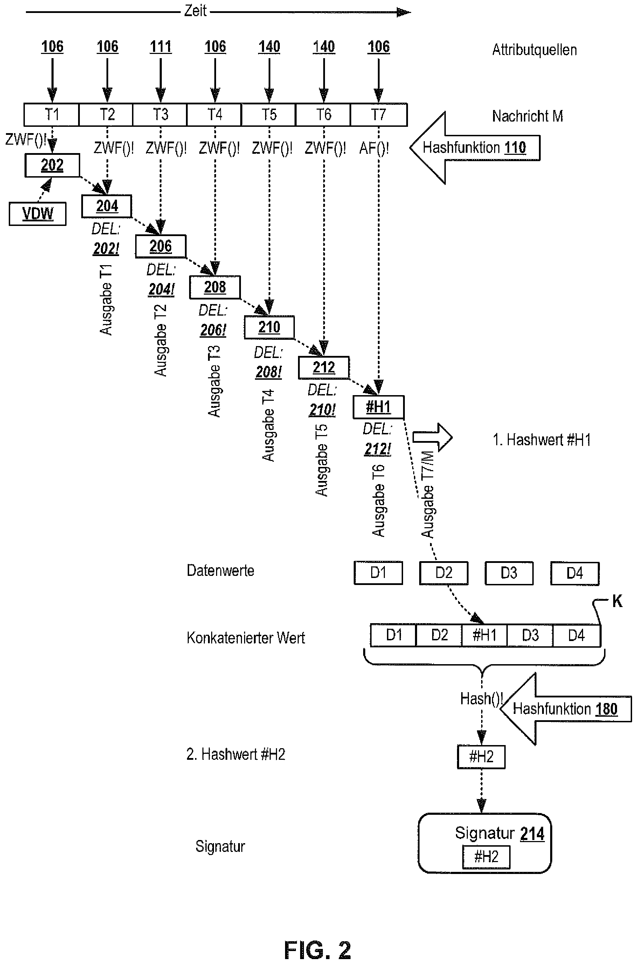

Nach bevorzugten Ausführungsformen folgt die verwendete Hashfunktion der Merkle-Damgård-Konstruktion. Eine Hashfunktion, die der Merkle-Damgård-Konstruktion folgt, teilt zunächst jeden einzelnen Teil (in Fig. 2 mit T1-T7 bezeichnet) einer Nachricht zuerst in Blöcke fester Länge, z.B. der Länge 64 Byte. Falls der letzte Block eines Teils weniger als die besagte Länge umfasst, wird dieser letzte Block mit zusätzlichen Bits aufgefüllt, z.B. mit "0" Bits, so dass die gesamte Länge jedes Teils der Nachricht ein ganzzahliges Vielfaches der Blocklänge beträgt. Die Zwischenwertfunktion, auch als "Kompressionsfunktion" bezeichnet, hat als Input einen Nachrichtenteil und den Output der für den vorigen Nachrichtenteil in einer vorherigen Iteration berechneten Wert. Der Hashwert der gesamten Nachricht ist der für den letzten Nachrichtenteil berechnete Zwischenwert.

Nach Ausführungsformen werden die Datenwerte an den gleichen Empfänger übermittelt, der auch die Nachricht und die Signatur erhält. Beispielsweise können die Datenwerte als Bestandteil der Signatur oder zusammen mit der Signatur oder zusammen mit der Nachricht ausgegeben werden. Nach alternativen Ausführungsformen haben sich der Empfänger und das Sicherheitstoken vor Signaturerstellung bereits auf die Datenwerte geeinigt, so dass diese nicht mehr übertragen werden müssen. Im Zuge der Signaturprüfung kann aber überprüft werden, ob die Datenwerte des Sicherheitstokens und des Empfängers übereinstimmen. Beispielsweise kann es sich bei den Datenwerten um Domänenparamter handeln, die als Input von kryptographischen Funktionen, insbesondere Key-Agreement-Funktionen, von dem Sicherheitstoken und dem Empfänger der Nachricht zur Vereinbarung von Schlüsseln verwendet werden. Dies kann z.B. im Zuge des Diffie-Hellman Schlüsselaustauschverfahrens oder im Zuge einer Generierung einer pseudonymen Signatur geschehen.

Nach Ausführungsformen umfasst das Anwenden der Zwischenwertfunktion oder der Abschlussfunktion der Hashfunktion zur Berechnung des ersten Hashwerts:

- Anwenden der Zwischenwertfunktion auf einen ersten der bereitgestellten Teile der Nachricht, sobald dieser bereitgestellt wurde, um einen Zwischenwert zu berechnen in welchen dieser erste der Teile der Nachricht eingeht;
- Für jeden weiteren der sequentiell bereitgestellten Teile der Nachricht, erneutes Anwenden der Zwischenwertfunktion auf den weiteren der bereitgestellten Teile der Nachricht, sobald dieser bereitgestellt wurde, um einen neuen Zwischenwert zu berechnen, wobei in die Berechnung des neuen Zwischenwerts der Zwischenwert des vorigen Schritts und der weitere bereitgestellte Teil der Nachricht eingeht, wobei auf den letzten bereitgestellten Teil der Nachricht die Abschlussfunktion anstatt der Zwischenfunktion angewendet wird;

- wobei das Anwenden der Abschlussfunktion auf den zuletzt bereitgestellten Teil der Nachricht und auf den zuletzt berechneten Zwischenwert den ersten Hashwert ergibt.

Nach Ausführungsformen überschreibt jeder der Zwischenwerte den im vorhergehenden Schritt berechneten Zwischenwert in dem Speicher. Dadurch kann der für die Signaturgenerierung benötigte Speicherbedarf erheblich reduziert werden.

Beispielsweise kann die Zwischenwertfunktion einen wiederverwendbaren Zwischenwert $Z_i$ mit $i =1$ bis $n-1$ ausgeben, wobei n die Anzahl der Teile der Nachricht wiedergibt. Die Zwischenwertfunktion verwendet dazu den vorherigen Zwischenwert und einen Teil i der Nachricht. Für den ersten bereitgestellten Teil der Nachricht wird ein vordefinierter Zwischenwert verwendet. Die Zwischenwertfunktion der ersten Hashfunktion wird zunächst auf den vordefinierten Zwischenwert und den ersten bereitgestellten Teil der Nachricht angewendet um einen zweiten Zwischenwert auszugeben. In einem nächsten Schritt wird die Zwischenwertfunktion der ersten Hashfunktion auf den zweiten Zwischenwert und den zweiten bereitgestellten Teil der Nachricht angewendet um einen dritten Zwischenwert auszugeben. In einem nächsten Schritt wird die Zwischenwertfunktion der ersten Hashfunktion auf den dritten Zwischenwert und den dritten bereitgestellten Teil der Nachricht angewendet um einen vierten Zwischenwert auszugeben. Und so weiter. Im letzten Schritt wird dann die Abschlussfunktion der ersten Hashfunktion auf den zuvor berechneten Zwischenwert und den letzten bereitgestellten Teil der Nachricht angewendet um den ersten Hashwert auszugeben. Dieser erste Hashwert ist identisch mit dem Hashwert, der sich auch ergeben würde, wenn man die erste Hashfunktion direkt auf die gesamte Nachricht anwenden würde (was hier aber eben nicht geschieht). Die Zwischenwertfunktion und die Abschlussfunktion der Hashfunktion sind so ausgebildet, dass die Art der Aufteilung der Nachricht in Teile zwar die Zwischenwerte beeinflussen kann, nicht jedoch das errechnete Endergebnis. Weiterführende Informationen zum mathematischen Hintergrund dieses Typs von Funktionen finden sich z.B. in der Literatur zur Merkle-Damgård-Konstruktion.

Beispielsweise kann das Verfahren für Ausführungsformen der Erfindung mathematisch wie folgt beschrieben werden:

$$M = T1 \parallel \ldots \parallel Tn \text{ mit } n >=2;$$

$$Z1 = H'(Z0,T1) ;$$

$$Zi = H'(Zi-1,Ti) \text{ mit } i = 2; \ldots; n;$$

$$H(M) = H''(Zn);$$

Oder, in einer Zeile ausgedrückt: H(M) = H"(H'(...H'(H'(H'(--,T1),T2),T3)...,Tn); Dabei steht M für die Nachricht, T1, ..., Tn steht für eine Anzahl von n Teilnachrichten T. Z ist ein Zwischenwert, i ist eine ganze Zahl von 2 bis n-1, Z0 ist ein festgelegter Wert, der zur Berechnung des ersten Zwischenwerts Z1 verwendet wird, H ist die erste Hashfunktion, H' ist die Zwischenwertfunktion der ersten Hashfunktion und H" ist die Abschlussfunktion der ersten Hashfunktion. Dabei ergibt sich am Ende genau der Hashwert, der sich auch ergeben würde, wenn man den Hash mittels der ersten Hashfunktion H direkt auf der gesamten Nachricht M in einem Schritt berechnen würde.

Bei der ersten Hash-Funktion kann es sich um eine beliebige HASH-Funktion handeln. Vorzugsweise handelt es sich um eine kryptographische Hash-Funktion. Diese bieten einen besseren Kollisionsschutz und sind in kryptographischer Hinsicht sicherer. Beispielsweise kann es sich bei der Hashfunktion um eine der folgenden Funktionen handeln: Brent-Hashing, Divisions-Rest-Methode, Doppel-Hashing, FNV, Kuckucks-Hashing, Multiplikative Methode, Mittquadratmethode, Zerlegungsmethode, Ziffernanalyse; Gitterbasierte Hashfunktionen wie z.B. Ajtai, Micciancio, Peikert-Rosen, Schnelle Fourier-Transformation, LASH; Prüfsummenbasierte Hashfunktionen wie z.B. Fletcher-32, Adler-32, CRC (Zyklische Redundanzprüfung), Parität, Quersumme; und insbesondere kryptographische Hashfunktionen wie z.B. MD2, MD4, MD5, SHA-1, SHA-256, SHA-512, RIPEMD-160, Tiger, HAVAL, Whirlpool, LM-Hash und NTLM.

Das Verfahren umfasst die Freigabe von Arbeitsspeicher des Sicherheitstokens, der durch jedes der Teile der Nachricht belegt wurde, unmittelbar nach der Anwendung der Zwischenwertfunktion oder der Abschlussfunktion auf diesen Teil der Nachricht. Alternativ dazu erfolgt die Freigabe von Arbeitsspeicher des Sicherheitstokens, der durch jedes der Teile der Nachricht belegt wurde, nach der Anwendung der Zwischenwertfunktion oder der Abschlussfunktion auf diesen Teil der Nachricht und unmittelbar nachdem dieser Teil der Nachricht über eine Schnittstelle des Sicherheitstokens ausgegeben wurde.

Dies kann vorteilhaft sein, da im Vergleich zu vorbekannten Signaturverfahren weniger Speicherplatz benötigt wird und der eingesparte Speicherplatz sofort für andere Anwendungen zur Verfügung steht.

Nach Ausführungsformen wird der freigegebene Speicher zur Speicherung der Zwischenwerte oder zumindest des jeweils zuletzt berechneten Zwischenwertes genutzt. Insbesondere kann der jeweils zuvor berechnete Zwischenwert mit einem Zwischenwert, der beim unmittelbar folgenden Aufruf der Zwischenwertfunktion berechnet wird, überschrieben werden bzw. mit dem durch die Abschlussfunktion berechneten ersten Hashwert.

Nach Ausführungsformen umfasst das Verfahren ferner eine Ausgabe jedes der bereitgestellten Teile der Nachricht vor der Berechnung und/oder vor der Ausgabe des zweiten Hashwerts über eine Schnittstelle des Sicherheitstokens. Insbesondere kann nach manchen Ausführungsformen jeder der bereitgestellten Teile der Nachricht auch vor der Berechnung und/oder Ausgabe des ersten Hashwerts über die Schnittstelle des Sicherheitstokens ausgegeben werden. Außerdem gibt das Sicherheitstoken Arbeitsspeicher des Sicherheitstokens, der durch den ausgegebenen Teil der Nachricht belegt wurde, unmittelbar nach Ausgabe des Teils der Nachricht frei. Dies kann das Signaturverfahren beschleunigen, da die Nachricht nicht erst dann zurückgegeben wird, wenn die zweite Hashfunktion auf den ersten Hashwert und die Datenwerte angewendet wird, sondern bereits dann, wenn der erste Hashwert berechnet wurde.

Nach Ausführungsformen handelt es sich bei der Signatur um eine Schnorr-Signatur. Die Generierung der Schnorr-Signatur umfasst:

- Vereinbarung von Domänenparametern zur Festlegung einer Gruppe G der Ordnung q=|G| zwischen dem Sicherheitstoken und einem Terminal; q ist eine Primzahl; Die Domänenparameter stellen einen Satz von Parametern dar, der eine Gruppe definiert; die für die Berechnung des zweiten Hashwertes verwendete Hashfunktion ist eine kryptographische Hashfunktion H mit Wertebereich [0, q-1];
- Generierung einer Zufallszahl x zur Verwendung als privater Schlüssel, wobei die Zufallszahl größer als Null und kleiner als die Primzahl q ist;
- Berechnung eines öffentlichen Schlüssels y mittels Skalarmultiplikation als ein dem privaten Schlüssel x entsprechendes Gruppenelement der Gruppe gemäß $y=g^x$; wobei g ein Generator der Gruppe ist; ein Generator ist eine einer mathematischen Gruppe zugeordnete Untermenge von Parametern, aus welcher alle Elemente der mathematischen Gruppe durch Anwendung einer Gruppenoperation erzeugt werden können;
- Berechnung einer Zufallszahl k, wobei die Zufallszahl größer als Null und kleiner als die Ordnung q der Gruppe G ist;
- Berechnung eines Schnorrsignatur-Zwischenwertes r mittels Skalarmultiplikation unter Verwendung des Generators g und der Zufallszahl k, wobei $r=g^k$, wobei diese Schreibweise für die k-fache Anwendung der Gruppenoperation steht; bei dem "Signatur-Zwischenwert" r handelt es sich nicht um einen der Zwischenwerte, die durch die Zwischenwertfunktion der ersten Hashfunktion berechnet wurden; Der Signatur-Zwischenwert r ist einer der Datenwerte und geht in die Generierung des konkatenierten Wertes (K) ein; Beispielsweise kann der zweite Hashwert #H2 berechnet werden mittels der Formel #H2=HF2(D1|D2|D3|r||#H1), wobei D1, D2 und D3 jeweils einer der Datenwerte ist, HF2 die zweite Hashfunktion ist, die auch mit der ersten Hashfunktion identisch sein kann, und #H1 der erste Hashwert ist; Je nach Ausführungsform kann Art und Anzahl der Datenwerte D1-D3 unterschiedlich sein.

- Berechnung eines Ergebniswertes s als der Summe aus der Zufallszahl k und dem Produkt aus dem privaten Schlüssel x und dem zweiten Hashwert (#H2) Modulo q; als Formel ausgedrückt: s=(k + x*#H2) mod q;
- Verwenden des zweiten Hashwerts #H2 und des Ergebniswerts s jeweils als Bestandteil der Signatur der Nachricht M. Es gilt demnach: Signatur S={s, #H2}. Der Signatur-Zwischenwert r ging in den zweiten Hashwert #H2 und damit in die Signatur S ein; Der Ergebniswert s ist Bestandteil der Signatur S und wird bei der Signaturverifikation genutzt.

Die Verwendung einer Schnorrsignatur ist vorteilhaft, da die Schnorr-Signatur ein besonders hohes Sicherheitsniveau bietet.

Nach Ausführungsformen handelt es sich bei den Datenwerten um ein oder mehrere der folgenden Werte:

- einen Zwischenwert eines Schlüsselaustauschverfahrens, z.B. um einen Zwischenwert, die bei einem Diffie-Hellman Schlüsselaustausch berechnet wurde; bei dem Zwischenwert des Schlüsselaustauschverfahrens kann es sich z.B. um einen ephemeralen Diffie-Hellman Schlüssel handeln; alternativ dazu kann es sich beim dem Zwischenwert auch einen Teil eines solchen ephemeralen Diffie-Hellman Schlüssels handeln oder um einen Datenwert, der auf sonstige Weise von dem ephemeralen Diffie-Hellman Schlüssel abgeleitet wurde. Beispielsweise kann der Zwischenwert ein Identifikator des Sicherheitstokens sein, der an ein Terminal übermittelt wird.
- einen öffentlichen Schlüssel, der einem Empfänger eine Entschlüsselung der Nachricht ermöglicht; der Schlüssel kann z.B. für das Sicherheitstoken oder für einen "Sektor" spezifisch sein; z.B. kann es sich um den öffentlichen Schlüssel eines Sektors "PK_SECTOR" gemäß TR-03110 Teil 2 Version 2.20 handeln; Unter einem "Sektor" wird hier ein bestimmter Terminaltyp und/oder ein bestimmtes Anwendungsszenario für die Generierung und Prüfung einer Signatur verstanden, z.B. Flughafenterminals zur Prüfung von Reisepässen oder Personalausweisdokumenten, Terminals am Eingang zum Firmengelände zur Prüfung von Mitarbeiterausweisen, etc.
- eine Token-ID, insbesondere eine sektorspezifische Token-ID, die z.B. als Pseudonym verwendet werden kann;
- ein sektorspezifisches Pseudonym einer Vielzahl von bei dem Sektor registrierten ID-Token (ein "sektorspezifisches Pseudonym" erlaubt es selektiv nur Terminals eines bestimmten Sektors, eine Identifikation des Sicherheitstokens anhand dessen Signatur durchzuführen).

- eine ID des anzuwendenden Signaturverfahrens oder Signaturverifikationsverfahrens. Diese kann zusätzlich oder alternativ dazu bereits in dem Terminal, das die Nachricht empfängt, gespeichert sein.

Die Datenwerte, die mit dem ersten Hashwert konkateniert werden, können insbesondere technische Steuerdaten sein, die es dem Terminal, welches den konkatenierten Wert empfängt, durch Auswertung der Steuerdaten ermöglicht, weitere Operationen durchzuführen. Zu den weiteren Operationen können z.B. die Identifikation des zur Prüfung der Signatur zu verwendenden Hashalgorithmus und/oder die Identifikation einer Gruppe von Sicherheitstoken, denen das Sicherheitstoken angehört, und/oder eine Prüfung der Validität der Signatur in Interoperation mit einem Revozierungsserver gehören.

Die Datenwerte, die mit dem ersten Hashwert konkateniert werden, können Daten beinhalten, die erst nach Abschluss der Ausgabe sämtlicher Teile der Nachricht zur Verfügung stehen, Daten, die auf dem Sicherheitstoken statisch gespeichert sind und/oder Daten, die dynamisch von einem Prozessor des Sicherheitstokens errechnet oder von einer externen Quelle, z.B. einem Attributserver, empfangen werden.

Wie anhand der besagten Beispiele für die Datenwerte, die mit dem ersten Hashwert konkateniert werden, ersichtlich ist, kann durch die Integration der Datenwerte ein technischer Zusatznutzen generiert werden. Die automatische Übermittlung dieser Information an ein Terminal kann es dem Terminal ermöglichen, automatisch zu erkennen, welches Signaturprüfverfahren das Terminal zur Signaturprüfung entsprechend anzuwenden hat. Außerdem können in Form der Datenwerte Informationen, die dem Terminal eines bestimmten Sektors die eindeutige Identifizierung des Identitätstokens erlauben, z.B. um dieses mit einer Revozierungsliste abzugleichen und ggf. sperren zu können, beinhalten. In anderen Ausführungsformen ist die Signatur eine pseudonyme Signatur, die ein Tracking des Inhabers des Sicherheitstokens durch Unberechtigte verhindert.

Nach Ausführungsformen beinhalten die Teile der Nachricht ein oder mehrere der folgenden Werte:

- ein aus einem Speicher des Sicherheitstokens ausgelesenes Attributwert; Der Attributwert kann z.B. im RAM, ROM oder EPROM des Sicherheitstokens gespeichert sein; der Attributwert kann ein nutzerspezifischer Attributwert sein und z.B. Angaben zu Alter, Wohnort oder Bankverbindungsdaten beinhalten;
- ein durch den Prozessor von einem Attributserver über ein Netzwerk empfangener Attributwert; auch hier kann es sich um einen nutzerspezifischen Attributwert handeln;

- ein durch den Prozessor des Sicherheitstoken dynamisch berechneter Attributwert; Beispielsweise kann der berechnete Attributwert Metadaten für andere in dem Sicherheitstoken gespeicherte Attributwerte enthalten und deren Verlässlichkeit oder Vertrauenswürdigkeit angeben; oder es kann sich bei dem berechneten Attributwert um einen kryptographisch verschlüsselten Wert handeln, der durch Verschlüsselung eines auf dem Sicherheitstoken gespeicherten Attributwerts gewonnen wurde;
- Name oder sonstige Attributwerte eines Nutzers, dem das Sicherheitstoken zugeordnet ist;
- Autorisierungsdaten eines Nutzers, dem das Sicherheitstoken zugeordnet ist. Bei den Autorisierungsdaten kann es sich z.B. um ein Passwort, z.B. eine PIN, oder um biometrische Daten, z.B. einen Fingerabdruck, ein Irisbild, ein Gesichtsbild oder ähnliches handeln, die z.B. als Referenz im Zuge eines Authentifizierungsvorgangs ausgewertet werden können.

Das Auslesen von Attributwerten aus einem Sicherheitstoken kann beispielsweise so implementiert werden, wie in Patentanmeldung WO2011006864 A2 beschrieben.

Nach Ausführungsformen handelt es sich bei der Signatur um eine pseudonyme Signatur.

Dies kann vorteilhaft sein, da pseudonyme Signaturen im Geschäftsverkehr einen hohen Grad an Sicherheit sowohl für den Nutzer (kein Tracking möglich) als auch für den Dienstanbieter bewirken. Ein Terminal, das Attributwerte von einer Chipkarte ausliest um diese einem Dienst zur Verfügung zu stellen, "weiß", z.B. nach Durchführung einer Chipkartenauthentifizierung, dass die Attributwerte aus einem vertrauenswürdigen Chip stammen. Um die Vertrauenswürdigkeit auch einem Dritten (dem Dienst) gegenüber belegen zu können, muss die Chipkarte nicht nur die Daten (hier als "Nachricht" bezeichnet) selbst an das Terminal liefern, sondern auch eine Signatur, die die Authentizität und Integrität der Daten, die vom Terminal an den Dienst weitergeleitet werden sollen, beweist. Anders als im Stand der Technik muss der Chip die Nachricht nicht im Speicher vorhalten, um sie nach Ausgabe an das Terminal zur Generierung der Signatur zu verwenden, und/oder muss die Daten auch nicht zweimal erzeugen. Vielmehr kann die Ausgabe der Daten und deren Signierung in einem Arbeitsschritt mit nur sehr geringem Speicherbedarf erfolgen. Dies ist insbesondere im Kontext von pseudonymen Signaturen vorteilhaft, da die Erzeugung pseudonymer Signaturen rechnerisch zumeist noch aufwändiger ist als die Erzeugung "konventioneller" Signaturen. Somit kann ein besonders effizientes und Verfahren zur Erzeugung pseudonymer Signaturen bereitgestellt werden. Damit ist der Einsatz pseudonymer Signaturen auch in besonders zeitkritischen Anwendungen möglich, etwa in Situationen, in welchen Warteschlangen vor Terminals vermieden werden müssen.

In einem weiteren vorteilhaften Aspekt hat sich herausgestellt, dass durch die schrittweise Berechnung des ersten Hashwerts, der in die pseudonyme Signatur eingeht, die kryptographische Sicherheit der pseudonymen Signatur nicht reduziert wird, sofern die Hashfunktion kryptographisch hinreichend sicher gewählt ist.

Nach Ausführungsformen ist das Sicherheitstoken eines aus einer Gruppe von Sicherheitstoken. In jedem der Sicherheitstoken ist ein öffentlicher Schlüssel ("PK$_{SECTOR}$") eines Terminals oder eines Dienstanbieters gespeichert. Beispielsweise kann der öffentliche Schlüssel ("PK$_{SECTOR}$") zusammen mit einer Anfrage zum Erhalt der Nachricht von dem Terminal an das Sicherheitsdokument übermittelt werden. Vorzugsweise gehören das Terminal oder der Dienst zu einem bestimmten Sektor und der öffentliche Schlüssel ist ein für sämtliche Terminals oder Dienste dieses Sektors identischer und für den Sektor spezifischer öffentlicher Schlüssel. In jedem der Sicherheitstoken ist zudem ein geheimer statischer Schlüssel ("SK$_{ICC\_1}$") gespeichert welcher für jedes der Sicherheitstoken einen unterschiedlichen Wert aufweist. Optional kann auch ein weiterer geheimer statischer Schlüssel in dem Sicherheitstoken gespeichert sein. Jedes der Sicherheitstoken ist dazu konfiguriert, eine sektorspezifische Token-ID ("Pseudonym") aus den in dem Sicherheitstoken gespeicherten geheimen statischen Schlüssel und dem öffentlicher Schlüssel ("PK$_{SECTOR}$") abzuleiten, wobei die Signatur (214) eine nur auf die Identität der Gruppe der Sicherheitstoken verweisende pseudonyme Signatur ist, wobei das Verfahren umfasst:

- Authentifizierung des Terminals gegenüber dem Sicherheitstoken;
- Im Falle einer erfolgreichen Authentifizierung des Terminals gegenüber dem Sicherheitstoken, Berechnung der sektorspezifischen Token-ID durch den Prozessor des Sicherheitstokens und Durchführung der Generierung der Nachricht und der Signatur;
- Übermittlung der generierten Nachricht, der berechneten sektorspezifischen Token-ID und der generierten Signatur an das Terminal;
- Empfang der Nachricht, der sektorspezifischen Token-ID und der Signatur durch das Terminal;
- Identifikation des Sicherheitstokens anhand der empfangenen sektorspezifischen Token-ID. Beispielsweise kann dies dadurch erfolgen, dass das Terminal die empfangene sektorspezifische Token-ID mit einer Liste von Referenz-Token-IDs vergleicht und ermittelt, ob die empfangene Token-ID diesem Sektor bekannt ist. Dass die Token-ID sektorspezifisch ist bedeutet, dass eine eindeutige Ermittlung eines spezifischen Sicherheitstokens und/oder des zugehörigen Nutzers nur durch Terminals eines bestimmten Sektors erfolgen kann. Die sektorspezifische Token-ID lässt eine solche Ermittlung der Identität des Tokens oder dessen Nutzers durch Terminals anderer Sektoren nicht zu.
- Optional führt das Terminal eine Prüfung durch, ob das identifizierte Sicherheitstoken in einer Revozierungsliste verzeichnet ist. Eine Identifikation des Sicherheitstokens durch Terminals, die den privaten Schlüssel ("SK$_{SECTOR}$") nicht beinhalten, ist damit ausgeschlossen, was den Datenschutz sicherstellt;
- Provider-Computersystem als Bestandteil der Nachricht, vorzugsweise unmittelbar, nachdem die Zwischenwertfunktion oder die Abschlussfunktion auf einen Teil der Nachricht, die diesem Attributwert entspricht, angewendet wurde. Die Übertragung geschieht dabei so, dass vor der Übertragung jedes Teils bzw. Attributwertes der Nachricht ein Zwischenwert der Signatur berechnet wird wie für Ausführungsformen des Verfahrens beschrieben. Ein Teil der Nachricht kann dabei einem einzigen Attributwert oder mehreren Attributwerten entsprechen. Die Signatur der Nachricht wird ebenfalls an das ID-Provider-Computersystem übertragen. Die Nachricht, also die sequentiell bereitgestellten Attributwerte, und die Signatur, und optional auch die Datenwerte (die mit dem ersten Hashwert konkateniert sein können) werden von dem ID-Provider-Computersystem an das Dienst-Computersystem weitergeleitet. Das Dienst-Computersystem prüft die übertragenen Attributwerte und die Validität der Signatur als Voraussetzung dafür, dass eine Transaktion aufgrund der Anforderung durchgeführt wird. Beispielsweise wird dem Nutzer ein KFZ nur dann durch einen KFZ-Verleih zur Verfügung gestellt, wenn dieser über 18 Jahre alt ist und einen Führerschein besitzt.

In einem weiteren Aspekt betrifft die Erfindung ein Sicherheitstoken umfassend einen Prozessor. Das Sicherheitstoken ist dazu konfiguriert, ein Verfahren nach einem der oben genannten Ausführungsformen auszuführen. Wie aus den jeweils beschriebenen Ausführungsformen hervorgeht, können die jeweiligen Verfahrensschritte von dem Sicherheitstoken alleine oder in Interoperation mit einem Nutzer, einem Terminal, einem ID-Provider-Computersystem und/oder einem Attribut-Server ausgeführt werden.

Im Weiteren werden Ausführungsformen der Erfindung mit Bezugnahme auf die Zeichnungen näher erläutert. Es zeigen:

Figur 1 ein Blockdiagramm eines Systems mit einem Sicherheitstoken und einem Dienst-Computersystem gemäß Ausführungsformen der Erfindung;
Figur 2 ein Schema der Generierung einer Signatur durch ein Sicherheitstoken;
Figur 3 ein Flussdiagramm eines Verfahrens zur Generierung einer Signatur;
Figur 4 ein mehrere Sicherheitstoken, die verschiedenen Nutzern zugeordnet sind, und pseudonyme Signaturen erzeugen können.

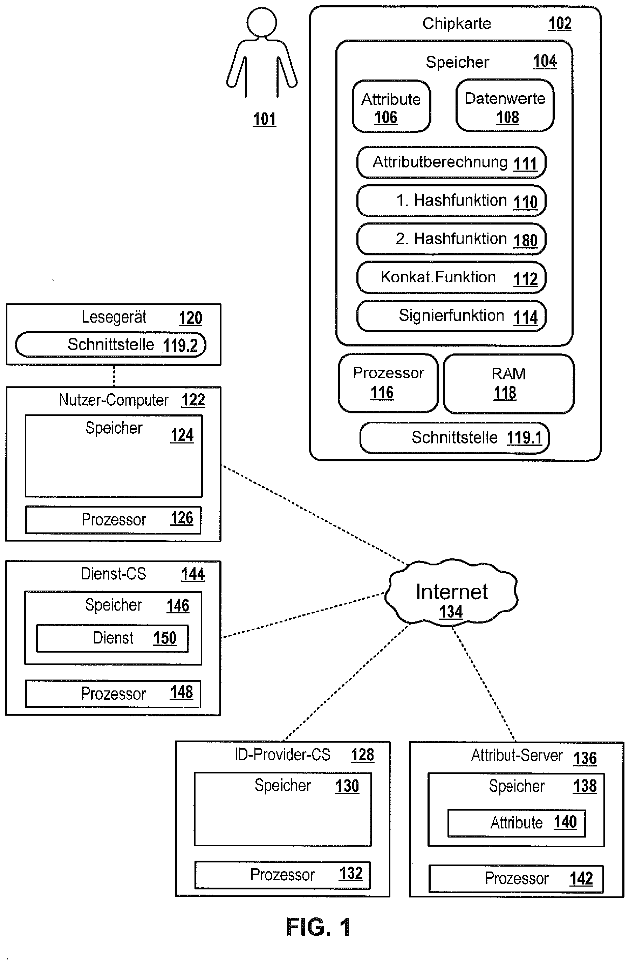

**Die Figur 1** zeigt ein Sicherheitstoken 102, das zum Beispiel als Chipkarte ausgebildet ist. Das Sicherheitstoken ist einem Nutzer 101 zugeordnet. Das Token besitzt einen nicht-flüchtigen Speicher 104, auf welchem ein oder mehrere Attributwerte 106 und ein oder mehrere Datenwerte 108 gespeichert sind. Alternativ oder zusätzlich zu den gespeicherten Attributwerten 106 verfügt das Sicherheitstoken über eine Programlogik 111 zur dynamischen Berechnung von ein oder mehreren Attributwerten. Außerdem ist in dem Speicher 104 eine Programlogik zur Ausführung einer Hashfunktion 101 zur Berechnung eines ersten Hashwerts (siehe Figur 2 #H1), eine Programlogik zur Ausführung einer Hashfunktion 180 zur Berechnung eines zweiten Hashwerts (siehe Figur 2 #H2), Programlogik zur Ausführung einer Konkatenierungsfunktion 112, sowie Programlogik 114 zur Generierung einer Signatur einer Nachricht, welche die konzertierte Ausführung der oben genannten Programlogiken kontrollieren kann, gespeichert. Die besagten Funktionen und Programlogiken werden von einem Prozessor 116 des Sicherheitstokens 102 ausgeführt. Beispielsweise kann es sich bei dem Prozessor um einen Chipkarten-Mikrocontroller handeln. Der Chipkarten-Mikrocontroller ist ein speziell für die Anforderungen von Chipkarten optimierte Mikrocontroller. Die Verbesserungen betreffen vor allem Aspekte der Chipsicherheit, Chipgröße und besondere Funktionseinheiten für chipkartenspezifische Anforderungen.

Außerdem verfügt die Chipkarte über einen Speicher 118 zur Speicherung von Daten. Bei dem Speicher 118 kann es sich um einen Volatilitätsdatenspeicher, zum Beispiel RAM, handeln. Das Sicherheitstoken kann über eine Schnittstelle 119.1, 119.2 Daten mit einem Lesegerät 120 austauschen. Bei der Schnittstelle kann es sich um eine kontaktbehaftete oder kontaktlose Schnittstelle handeln.

Das Lesegerät 120 kann mit einem Nutzer-Computer 122, dass dem Nutzer 101 zugeordnet ist, verbunden sein. Das Nutzercomputersystem beinhaltet einen Prozessor 126 und einen Datenspeicher 124, auf welchem zum Beispiel ein Programm zum Management der in dem Sicherheitstoken gespeicherten Attributwerte 106 und Datenwerte 108 installiert sein kann.

Das Nutzer-Computersystem 122 ist mit einem Dienst-Computersystem 144 und optional auch mit einem ID-Provider-Computersystem 128 und/oder einem Attribut-Server 136 über ein Netzwerk, zum Beispiel das Internet 134, verbunden. Das ID-Provider-Computersystem 128 verfügt über einen Prozessor 132 und einen Datenspeicher 130, in welchem eine Programlogik zur Bestätigung der Identität des Nutzers gegenüber zum Beispiel dem Dienstcomputersystem 144 installiert ist. Der Attributserver 136 besitzt einen Prozessor 142 und ein nicht flüchtiges Speichermedium 138, in welchem weitere Attributwerte 140, die dem Nutzer 101 zugeordnet sind, gespeichert sind. Der Speicher 138 kann die Attributwerte einer Vielzahl von Nutzern beinhalten.

Der Nutzer 101 kann beispielsweise sich seines Nutzer-Computersystems 122 bedienen, um einen Dienst, der über das Internet von dem Dienst-Computersystem 144 bereit gestellt wird, in Anspruch zu nehmen. Bei dem Dienst kann es sich zum Beispiel um einen Kfz-Verleih handeln. Um ein Fahrzeug bei dem Dienst reservieren zu können, übermittelt der Nutzer dem Dienst seine Identität, insbesondere also seinen Namen und seine Adresse und gegebenenfalls auch Kontoinformationen in vertrauenswürdiger Weise. Außerdem übermittelt der Nutzer dem Dienst weitere Attributwerte, zum Beispiel sein Alter und Informationen darüber, ob er oder sie einen Führerschein besitzt. Hierfür kann der Nutzer ein Sicherheitstoken, auf dem die bezeichneten relevanten Daten und Attributwerte gespeichert sind, zum Beispiel seinen elektronischen Personalausweis, in das Lesegerät 120 einführen.

Nachdem der Nutzer sich gegenüber dem Sicherheitstoken zum Beispiel durch Eingabe einer PIN authentifiziert hat und nachdem eine auf dem Nutzer-Computersystem installierte Applikation in Interoperation mit einem ID-Provider-Computersystem 128 veranlasst hat, dass das ID-Provider-Computersystem 128 sich gegenüber dem Sicherheitstoken erfolgreich authentifiziert, werden die Attributwerte 106 und ggf. noch weitere dynamisch berechnete Attributwerte sequentiell durch den Prozessor des Sicherheitstokens bereitgestellt, wobei parallel durch den Prozessor 116 ein erster Hashwert berechnet wird (siehe Fig. 2). Der erste Hashwert wird mit ein oder mehreren weiteren Datenwerten konkateniert um einen zweiten Hashwert zu berechnen, der in eine Signatur eingeht. Die Attributwerte, die Bestandteile einer Nachricht darstellen, und die Signatur werden an das ID-Provider-Computersystem übermittelt. Beispielsweise kann zuvor das Dienst-Computersystem eine Liste aller benötigten Attribute z.B. in Form einer Attributspezifikation an das ID-Provider-Computersystem übertragen haben und das ID-Provider-Computersystem nur die in der Attributspezifikation angegebenen Attribute von dem Sicherheitstoken anfordern. Der Empfang der Attributwerte von dem Sicherheitstoken durch das ID-Provider Computersystem 128 kann eine gegenseitige Authentifizierung von Sicherheitstoken 102 und ID-Provider-Computersystem vorsehen und voraussetzen. Das ID-Provider-Computersystem leitet sodann die Attributwerte und deren Signatur an ein Dienst-Computersystem weiter. Die Nachricht, also die (ggf. in einer Attributspezifikation spezifizierten) Attributwerte, wird schließlich von dem ID-Provider-Computersystem an das Dienst-Computersystem übertragen. Das Dienst-Computersystem kann sodann ein entsprechendes Signaturprüfverfahren durchführen.

Nach Ausführungsformen ist es auch möglich, dass das Sicherheitstoken ein oder mehrere der Attributwerte, die es ausgibt, zuvor von einer externen Quelle, zum Beispiel einen Attribut-Server 136 über das Netzwerk 134 bezieht. Nach der erfolgreichen Authentifizierung des Nutzers gegenüber dem Sicherheitstoken und der erfolgreichen Authentifizierung des ID-Provider-Computersystems gegenüber dem Sicherheitstoken erfolgt eine Feststellung durch das ID-Provider-Computersystem, dass zumindest einer der Attributwerte, die von dem ID-Provider-Computersystem angefordert werden, in dem Sicherheitstoken nicht gespeichert ist und nicht berechnet werden kann. Im Falle der Feststellung veranlasst das ID-Provider-Computersystem 128 den Attribut-Server 136 dazu, sich gegenüber dem Sicherheitstoken 102 zu authentifizieren. Nach erfolgreicher Authentifizierung des Attribut-Servers gegenüber dem Sicherheitstoken überträgt der Attribut-Server ein oder mehrere Attributwerte an das Sicherheitstoken. Die übertragenen Attributwerte können in einem Speicher 104 des Sicherheitstokens, zum Beispiel in verschlüsselter Form, gespeichert werden und in Antwort auf eine Attributanforderung des Dienst-Computersystems und/oder zu einer späteren Zeit ausgegeben werden. Da das verwendete Signatur-Generierungsverfahren nur wenig Speicher benötigt und auch nicht eine zweimalige Bereitstellung Allerattributwerte sowohl für die Übermittlung an das Dienst-Computersystem als auch für die Generierung der Signatur erfordert, ist das beschriebene Signaturgenerierungsverfahren besonders geeignet, Signaturen auch für lange Nachrichten mit sehr vielen Attributwerten schnell und ressourcenschonend bereitzustellen.

Figur 2 zeigt eine Ausführungsform des erfindungsgemäßen Verfahrens zur Generierung einer Signatur 214 für eine Nachricht M durch einen Prozessor 116 des Sicherheitstokens 102. Zunächst werden mehrere Teile T1-T7 einer Nachricht M sequenziell von dem Prozessor 116 bereitgestellt. Die Bereitstellung kann ein Lesen der Teile aus einem Datenspeicher 104 des Sicherheitstokens, die dynamische Berechnung 111 der Teile durch den Prozessor 116 und/oder ein Empfangen der Teile von einer externen Datenquelle 136A über ein Netzwerk 134 beinhalten. Während der Bereitstellung, also zu einem Zeitpunkt, in dem das Sicherheitstoken zwar ein oder mehrere der Teile vollständig in den Speicher geladen und damit verfügbar hat, jedoch noch nicht sämtliche Teile der Nachricht in den Speicher 118 geladen und damit verfügbar sind, wendet der Prozessor 116 eine Zwischenwertfunktion ZWF oder, im letzten Berechnungsschritt, eine Abschlussfunktion AF einer Hashfunktion 110 auf den jeweils aktuell bereitgestellten Teil der Nachricht an, und zwar unmittelbar nach der Bereitstellung des jeweiligen Teils. Somit wird schrittweise ein erster Hashwert #H1 berechnet, welche identisch ist mit dem Wert, der bei Anwendung der Hashfunktion 110 auf die gesamte Nachricht M erhalten worden wäre (unter der Voraussetzung, dass die Reihenfolge der Teile der Nachricht in der gesamten Nachricht der chronologischen Sequenz der Bereitstellung der Teile entspricht. Dies wird durch die auf dem Sicherheitstoken implementierte Programlogik 114 zur Generierung der Signatur 214 sichergestellt). Die chronologische Sequenz der Bereitstellung der Teile der Nachricht erfolgt so, dass zum Zeitpunkt t1 zunächst Teil T1 bereitgestellt wird, zum Zeitpunkt t2, dann Teil T2, dann Teil T3 zum Zeitpunkt t3 usw. bei den Teilen T1, T2, T4 und T7 kann es sich beispielsweise um bereits gespeicherte Attributwerte 106 handeln. Bei Teil T3 kann es sich zum Beispiel um einen mittels Modul 111 dynamisch berechneten Attributwert handeln. Die Teile T5 und T6 können Attributwerte 140 sein, die von einem Attributserver 136 über ein Netzwerk empfangen wurden.

Das Anwenden der Zwischenwertfunktion ZWF oder der Abschlussfunktion AF der Hashfunktion 110 geschieht derart, dass die Zwischenwertfunktion ZWF auf einen ersten Teil T1 der Nachricht, sobald dieser bereitgestellt wurde, angewendet wird, um einen ersten Zwischenwert 202 zu berechnen. In diesen ersten Zwischenwert 202 geht der erste Teil T1 und ein vordefinierter Wert VDW der Hashfunktion 110 ein. Der erste Zwischenwert 202 nimmt einen bestimmten Speicherbereich im Speicher 118 ein. Sobald der erste Zwischenwert 202 berechnet wurde, wird der Teil T1 als Bestandteil der Nachricht M ausgegeben (zum Beispiel an das Lesegerät 120 zur Weitervermittlung an das ID-Provider-Computersystem und/oder Dienst-Computersystem 144). In einem nächsten Schritt wird die Zwischenwertfunktion ZWF erneut angewendet, und zwar auf den ersten Zwischenwert 202 und den zweiten Teil T2 der Nachricht, sodass ein zweiter Zwischenwert 204 zurückgegeben wird. Der zweite Zwischenwert 204 überschreibt den ersten Zwischenwert 202 im Speicher 118. Der Vorgang des Überschreibens ist in Figur 2 durch "DEL 202!" angedeutet. Dies wiederholt sich für jeden der bereitgestellten Teile der Nachricht bis zu Teil T6, sodass ein Zwischenwert 212 zurückgegeben wird. Auf diesen und auf den letzten Teil-T7 der Nachricht wird eine Abschlussfunktion AF angewendet, die den ersten Hashwert #H1 zurückgibt. Der erste Hashwert ist identisch zu dem Wert, der erhalten worden wäre, hätte man die Hashfunktion 110 direkt auf die gesamte Nachricht M bestehend aus den Teilen T1-T7 angewendet.

Schließlich stellt der Prozessor 116 ein oder mehrere Datenwerte D1 bis D4 bereit. Bei diesen Datenwerten kann es sich zum Beispiel um technische Kontrolldaten handeln, die dem Empfänger ermöglichen, ein geeignetes Signaturprüfverfahren zur Überprüfung der Signatur 214 auszuwählen und/oder die Identität des Sicherheitstokens 102 eindeutig festzustellen, zum Beispiel um dieses in einer Revozierungsliste zu suchen um zu prüfen, ob das Sicherheitstoken noch gültig ist. Typischerweise, aber nicht notwendigerweise, handelt es sich also bei den Teilen der Nachricht um nutzerbezogene Daten, während es sich bei den Datenwerten D1-D4 um technische oder kryptographische Parameter und Datenwerte, Schlüssel- oder Token-IDs handeln kann.

In einem weiteren Schritt werden nun die Datenwerte D1-D4 und der erste Hashwert #H1 durch Anwendung der Konkatenierungsfunktion 112 konkateniert, sodass ein konkatenierten Wert K entsteht. Die Hashfunktion 110 oder eine andere, "zweite" Hashfunktion 180 wird auf den konkatenierten Wert K angewandt und ein zweiter Hashwert #H2 zurückgegeben. Dadurch, dass der zweite Hashwert aus einem konkatenierten Wert abgeleitet wird, welcher nur den Hash #H1 der Nachricht M, nicht jedoch die gesamte Nachricht M beinhaltet, ist es also nicht erforderlich, mit der Ausgabe der Nachricht M zu warten, bis der zweite Hashwert #H2 und/oder die Signatur 214 berechnet wurde. Vielmehr kann die Nachricht M sequentiell ausgegeben werden, und zwar so, dass jeder Teil der Nachricht ausgegeben wird unmittelbar nachdem die Zwischenwertfunktion ZWF oder die Abschlussfunktion AW auf diesen Teil angewandt wurde.

Der zweite Hashwert #H2 wird Bestandteil der für die Nachricht generierten Signatur 214.

In die Signatur 214 können noch weitere Datenwerte eingehen. Beispielsweise können einige oder alle der Datenwerte D1-D4 in die Generierung der Signatur 214 eingehen und optional zusammen mit dieser oder zu einem anderen Zeitpunkt ausgegeben werden. Alternativ dazu können einige oder alle der Datenwerte D1-D4 bereits auf der Seite des Empfängers, zum Beispiel einem Datenverarbeitungssystem das eine Signaturprüfung durchführen soll, z.B. in einem Dienst-Computersystem, einem Revozierungs-Terminal, einem sonstigen Terminal oder dergleichen, bereits vorhanden sein. In diesem Fall kann durch eine empfängerseitige Berechnung des zweiten Hashwerts #H2' aus der empfangenen Nachricht M und den weiteren, empfängerseitig gespeicherten Datenwerten D1-D4, die Identität der von dem Sicherheitstoken und dem vom Empfänger verwendeten Datenwerte überprüft werden. Zum Beispiel kann es sich bei den Datenwerten D1-D4 um Domänenparameter handeln, die zwischen dem Sicherheitstoken und einem Terminal vereinbart wurden, und der zweite Hashwert #H2 kann verwendet werden, um Identität der vereinbarten Domänenparameter zu bestätigen, ohne hierfür die Domänenparameter zwischen Token und Terminal austauschen zu müssen.

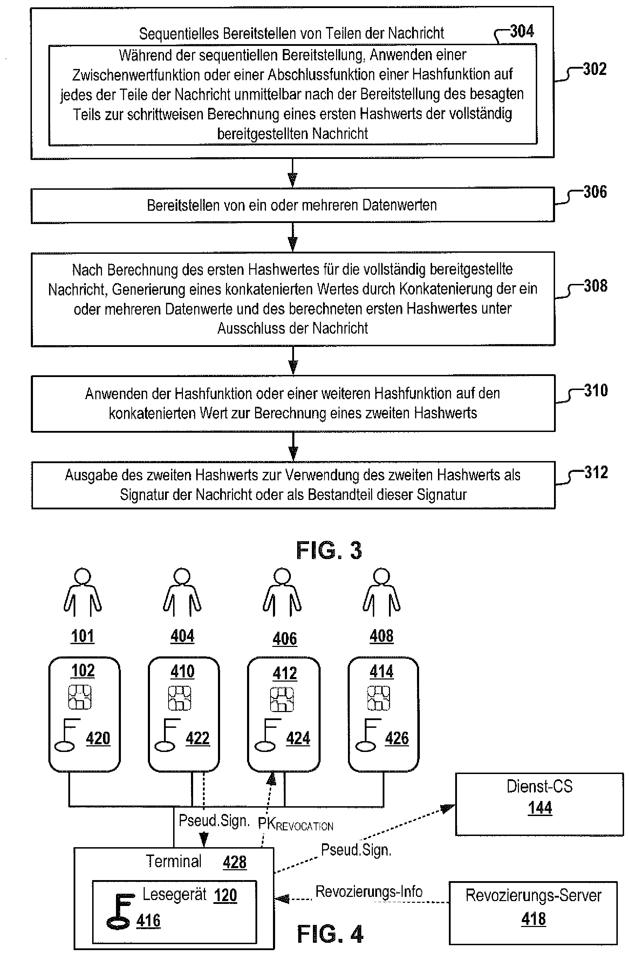

**Figur 3** zeigt ein Flussdiagramm einer Ausführungsform eines Verfahrens zur Generierung einer Signatur 214 für eine Nachricht M durch einen Prozessor 116 eines Sicherheitstokens 102. In dem Verfahren werden in einem ersten Schritt 302 Teile T1-T7 der Nachricht M durch den Prozessor 116 sequentiell bereitgestellt. Bei den Teilen kann es sich zum Beispiel um Attributwerte handeln, die einem Nutzer 101 zugeordnet sind, der in Besitz des Sicherheitstokens ist und dem dieses zugeordnet ist. Während der sequentiellen Bereitstellung, erfolgt ein Anwenden 304 einer Zwischenwertfunktion ZWF oder einer Abschlussfunktion AF einer Hashfunktion 110 auf jedes der Teile der Nachricht unmittelbar nach der Bereitstellung des besagten Teils. Dadurch wird schrittweise ein erster Hashwert #H1 berechnet. Dieser ist identisch mit einem Wert, der bei Anwendung der Hashfunktion 110 auf die gesamte Nachricht M erhalten worden wäre. In einem weiteren Schritt 306 stellt der Prozessor 116 ein oder mehrere Datenwerte D1-D4 bereit. Nach der Berechnung des ersten Hashwerts für (also nicht auf) die vollständig bereitgestellte Nachricht, generiert der Prozessor in Schritt 308 einen konkatenierten Wert K, indem er die ein oder mehreren Datenwerte D1-D4 und den berechneten ersten Hashwert #H1 konkateniert. Die Nachricht M ist von der Konkatenierung ausgeschlossen, d.h., sie ist nicht einer der Datenwerte und geht nur über den für sie berechneten ersten Hashwert in den zweiten Hashwert ein. In Schritt 310 wendet der Prozessor die Hashfunktion 110 oder eine weitere Hashfunktion auf den konkatenierten Wert K an um dadurch den zweiten Hashwert #H2 zu berechnen. In Schritt 312 gibt der Prozessor den zweiten Hashwert #H2 zur Verwendung des zweiten Hashwerts als die Signatur 214 der Nachricht oder als ein Bestandteil dieser Signatur 214 aus. Beispielsweise kann die Signatur an ein Lesegerät 120 übertragen werden, und von diesem weiter an ein ID-Server-Computersystem und/oder ein Dienst-Computersystem 144 und/oder einen anderen Empfänger, z.B. ein Terminal.

**Figur 4** zeigt mehrere Sicherheitstoken 420, 422, 424, 426, z.B. Chipkarten, und die zur Generierung einer sektorspezifischen, pseudonymen Signatur ausgebildet sind, gemäß einer Ausführungsform der Erfindung. Die Sicherheitstoken sind jeweils einem Nutzer 101, 404, 406, 408 zugeordnet. Die Sicherheitstoken 420, 422, 424, 426 bilden eine Gruppe von Sicherheitstoken, die dem gleichen Sektor angehören und zur Generierung einer pseudonymen Signatur ausgebildet sind. Die so gebildete pseudonyme Signatur 214 lässt allenfalls eine Identifikation der Gruppe der Token zu, nicht jedoch der individuellen Token.

Ein Terminal 428, das zum Beispiel an einem Flughafen oder am Einlass eines Firmengeländes stehen kann, kann eines von mehreren Terminals (nicht abgebildet) des gleichen Sektors sein. All die besagten Terminals des besagten Sektors können zur Verifikation einer pseudonymen Signatur einer von einem Sicherheitstoken empfangenen Nachricht ausgebildet sein.

Vor der Herausgabe der Sicherheitstoken 101, 404-408 wird von einer vom Herausgeber betriebenen Programmlogik ("Gruppenmanager") ein asymmetrisches kryptographisches Schlüsselpaar über einem Satz Domänenparametern Q gebildet, wobei das Schlüsselpaar einen privaten Schlüssel $SK_M$ und einen öffentlichen Schlüssel $PK_M$ beinhaltet. Ein erweiterter Satz Domänenparameter $Q^\wedge$, der auch den öffentlichen Schlüssel $PK_M$ enthält, wird vom Herausgeber der Token auf jedem der Sicherheitstoken des Sektors gespeichert. Jedes Terminal eines bestimmten Sektors beinhaltet einen öffentlichen Schlüssel $PK_{SECTOR}$, der zusammen mit einem privaten sektorspezifischen Schlüssel $SK_{SECTOR}$ ein asymmetrisches kryptographisches Schlüsselpaar bildet.

Das Sicherheitstoken besitzt einen ihm spezifisch zugeordneten öffentlichen Schlüssel, der im Folgenden als $PK_{ICC}$ bezeichnet wird und der einem privaten Schlüssel, der als $SK_{ICC}$ bezeichnet wird, zugeordnet ist. $PK_{ICC}$ und $SK_{ICC}$ bilden ein asymmetrisches kryptographisches Schlüsselpaar. Der private Schlüssel $SK_{ICC}$ wird nicht in dem Sicherheitstoken gespeichert. Der öffentliche Schlüssel $PK_{ICC}$ kann z.B. im Zuge der PACE -Mapping-Phase oder im Zuge eines Diffie-Hellman Schüsselaustauschverfahrens an das Sicherheitstoken übertragen werden.

Der "Gruppenmanager" generiert für jeden der Token, der herausgegeben werden soll, einen Zufallswert $SK_{ICC\_2}$ und berechnet aus diesem Zufallswert mittels Linearzerlegung einen weiteren Wert $SK_{ICC\_1}$ z.B. so, dass die folgende Gleichung erfüllt ist: $SK_M = SK_{ICC\_1} + SK_M * SK_{ICC\_2}$. Auch andere Formen der Linearzerlegung sind möglich. Die somit ermittelten Werte $SK_{ICC\_1}$ und $SK_{ICC\_2}$ sind individuell für jedes der Sicherheitstoken. Der Wert $SK_{ICC\_1}$ wird auf dem Token als erster privater statischer Schlüssel gespeichert, dem ein Identifikator ID- $SK_{ICC\_1}$ zugeordnet ist. Die Zuordnung kann z.B. statisch sein und dadurch erfolgen, dass der Prozessor des ID-Tokens (z.B. auf Veranlassung des Gruppenmanagers) mittels einer Schlüsselableitfunktion und einem öffentlichen sektorspezifischen Schlüssel $PK_{SEKTOR}$ des Sektors, dem der Gruppenmanager angehört, den Identifikator für die spätere Verwendung berechnet. Der Identifikator ID- $SK_{ICC\_1}$ kann dabei dynamisch im Zuge der Berechnung der pseudonymen Signatur berechnet werden, liegt in diesem Fall also nicht gespeichert im ID-Token vor. Alternativ dazu kann der für einen Sektor generierte Identifikator auch vorberechnet und in dem ID-Token gespeichert werden, wenn der entsprechende sektorspezifische öffentliche Sektorschlüssel hierfür vorab dem ID-Token zur Verfügung gestellt wurde. Falls sich das ID-Token gegenüber Terminals mehrerer Sektoren authentifizieren soll, können in diesem Fall entsprechend mehrere sektorspezifische Identifikatoren aus dem privaten Schlüssel des Tokens und einem öffentlichen Sektorschlüssel des jeweiligen Sektors vorberechnet werden.

Die Vorberechnung und Speicherung von permanenten oder zumindest mehrfach zu verwendenden statischen Schlüsseln und Identifikatoren kann z.B. eine Revozierung anhand dieser Identifikatoren durch ein Terminal eines berechtigten Revozierungs-Sektors ermöglichen. In diesem Fall dient der Identifikator also nicht als Pseudonym.

Die statischen Schlüssel $SK_{ICC\_1}$ bzw. $SK_{ICC\_2}$ und deren Identifikatoren ID- $SK_{ICC\_1}$ bzw. ID- $SK_{ICC\_2}$ (und von diesen abgeleitete Werte) werden zur Berechnung einer Signatur verwendet, die für alle Token eines Sektors gleich ist ("Pseudonyme Signatur"). Bei den Identifikatoren ID- $SK_{ICC\_1}$ bzw. ID- $SK_{ICC\_2}$ handelt es sich um "Pseudonyme", also um Datenwerte, die es selektiv Terminals eines bestimmten Sektors ermöglichen, ein ID-Token zu identifizieren. Ein "Pseudonym" (nicht zu verwechseln mit "pseudonymer Signatur") ist ein Datenwert, der lediglich für die Terminals eines bestimmten Sektors ein Identifizierungsmerkmal eines ID-Tokens darstellt, sodass kein-Tracking über unterschiedliche Sektoren anhand dieses Datenwertes möglich ist ("Pseudonym").

Der Datenwert ID- $SK_{ICC\_1}$ ist also ein durch das ID-Token anhand des durch das Terminal vorgegebenen Sektors (z.B.: $PK_{REVOCATION}$) berechnetes "Pseudonym". Alle Terminals eines Sektors haben den gleichen öffentlichen Sektorschlüssel. Nur Terminals des Sektors, basierend auf dessen öffentlichen Sektorschlüssel die statischen Schlüssel abgeleitet wurden und welche den entsprechenden öffentlichen Sektorschlüssel besitzen, können das ID-Token anhand des Datenwerts ID- $SK_{ICC\_1}$ (bzw. ID- $SK_{ICC\_2}$) eindeutig identifizieren.

Alternativ oder zusätzlich wird auch der Wert $SK_{ICC\_2}$ auf dem Token als zweiter privater statischer Schlüssel gespeichert, dem ein Identifikator ID- $SK_{ICC\_2}$ zugeordnet ist. Anstatt des privaten kryptographischen Schlüssels $SK_{ICC}$ werden also ein erster und ein zweiter statischer privater Schlüssel $SK_{ICC\_1}$, $SK_{ICC\_2}$ im Sicherheitstoken gespeichert. Der Gruppenmanager speichert nach Ausführungsformen eine Zuordnung der Identifikatoren ID- $SK_{ICC\_1}$ und/oder ID- $SK_{ICC\_2}$ zu dem Sicherheitstoken, auf welchem die entsprechenden ersten und zweiten geheimen statischen Schlüssel, die durch ID- $SK_{ICC\_1}$ und ID- $SK_{ICC\_2}$ identifiziert werden, gespeichert wurden. Vorzugsweise sind die beiden Identifikatoren ID- $SK_{ICC\_1}$ und ID- $SK_{ICC\_2}$ jeweils sektorspezifisch. Diese Zuordnung kann auf Terminals übertragen werden oder so gespeichert werden, dass die Zuordnung von manchen Terminals nach einer Authentifizierung gelesen werden kann.

Außerdem erhalten die Terminals eines bestimmten Sektors (z.B. Eintritts-kontrollTerminals einer bestimmten Firma oder Flughafen-Kontrollterminals) den öffentlichen, sektorspezifischen Schlüssel $PK_{SECTOR}$, die erweiterten Domänenparameter $D^{\wedge}$ und den privaten Schlüssel $SK_{SECTOR}$, der mit dem öffentlichen Schlüssel $PK_{SECTOR}$ ein asymmetrisches kryptographisches Schlüsselpaar bildet.

Sofern eines oder mehrere der Terminals als Revozierungs-Terminal 428 ausgebildet ist, also als ein Terminal, das die eine Token-ID von dem Sicherheitstoken erfragen darf um anhand dieser Token-ID die Identität des Sicherheitstokens zu ermitteln und mit einer Revozierungsliste abzugleichen, erhält es zudem einen öffentlichen Revozierungsschlüssel $PK_{REVOCATION}$. Die Revozierungsliste kann z.B. von einem Revozierungsserver 418 über ein Netzwerk bereitgestellt werden. Mit dem Revozierungsschlüssel $PK_{REVOCATION}$, der per Kommando an das Sicherheitstoken übertragen wird, kann sich das Terminal gegenüber dem Sicherheitstoken als berechtigt zum Empfang der Token-ID ausweisen. Ein privater Schlüssel $SK_{RECOCATION}$, der in dem Terminal gespeichert ist, bildet mit dem öffentlichen Schlüssel $PK_{REVOCATION}$ ein asymmetrisches kryptographisches Schlüsselpaar.

Auf allen Terminals des Sektors wird der erweiterte Satz an Domänenparametern $Q^{\wedge}$ und der öffentliche sektorspezifische Schlüssel $PK_{SECTOR}$ gespeichert.

Auch bei dem öffentlichen Schlüssel $PK_{REVOCATION}$ kann es sich um eine Form des sektorspezifischen öffentlichen Schlüssel $PK_{SECTOR}$ handeln, der z.B. spezifisch für Terminals ausgestellt wird, die zur Revozierung einer bestimmten Gruppe von Sicherheitstoken ausgebildet sind.

Die Berechnung der pseudonymen Signatur 214 erfolgt nun durch die Prozessoren jedes der Sicherheitstoken zum Beispiel gemäß dem folgenden Verfahren:

Zunächst berechnet das Token den ersteh Hashwert #H1 der Nachricht M wie für Ausführungsformen der Erfindung bereits beschrieben. Jeder Teil der Nachricht, der bereits prozessiert wurde, kann sofort ausgegeben werden, z.B. an ein Terminal, das sich gegenüber dem Token als berechtigt ausgewiesen hat, die Nachricht M zu empfangen.

Das Token verwendet eine kryptographische Gruppe GR mit Basispunkt b und einer Ordnung q der Domänenparameter G. Die pseudonyme Signatur PS für eine Nachricht M wird nun wie folgt generiert:
$PS=PSign(Q^\wedge, ID\text{-}SK_{ICC\_1}$, und $ID\text{-}SK_{ICC\_2}, SK_{ICC\_1}, SK_{ICC\_2}, ID\text{-}DSI, M)$, wobei ID-DSI das durchzuführende Signaturgenerierungsverfahren und entsprechend auch das vom Terminal anzuwendende Signaturverifikationsverfahren identifiziert. Die Werte $ID\text{-}SK_{ICC\_1}$, und $ID\text{-}SK_{ICC\_2}$ können in dem Token vorgespeichert sein oder dynamisch zum Zwecke der Ermöglichung der Generierung einer pseudonymen Signatur vom Terminal an das ID-Token übertragen werden. Die Durchführung der Funktion PSign umfasst folgende Schritte:

1. Wähle die Zufallszahlen Z1, Z2 aus der Menge der natürlichen Zahlen größer Null aus.

2. Berechne einen Wert ZQ1 mit Hilfe einer Schlüsselvereinbarungsfunktion KA gemäß $ZQ1=KA(Z1, b)*KA(Z2, PK_M)$, wobei $PK_M$ ein öffentlicher Schlüssel des Herausgebers des Sicherheitstokens ist und für einen Sektor spezifisch ist, wobei dieser öffentliche Schlüssel auf jedem der Sicherheitstoken des Sektors gespeichert ist, ;

3. Berechne einen Wert $ZA1=KA(Z1, PK_{SECTOR})$ sofern $ID\text{-}SK_{ICC\_1}$ als Argument an die Funktion PSign übergeben wurde, wobei KA eine Schlüsselvereinbarungsfunktion (key agreement function) ist;

4. Berechne einen Wert $ZA2=KA(Z2, PK_{SECTOR})$ sofern $ID\text{-}SK_{ICC\_2}$ als Argument an die Funktion PSign übergeben wurde;

5. Falls ZQ1=0 oder ZA1=0 oder ZA2 =0, wiederhole Schritte 1-5;

6. Berechne einen konkatenierten Wert K gemäß K=Konkatenierungsfunktion($ZQ1|ID\text{-}SK)_{ICC\_1}|ZA1|ID\text{-}SK_{ICC\_2}|ZA2|PK_{SECTOR}|ID\text{-}DSI|\#H1$);

7. Berechne einen zweiten Hashwert #H2 gemäß #H2=H(K), wobei H die zweite Hashfunktion darstellt, die mit der ersten Hashfunktion identisch sein kann;

8. Berechne den Wert s1 gemäß s1=Z1-$\#H2*SK_{ICC\_1}$ mod q;

9. Berechne den Wert s2 gemäß s2=Z2-$\#H2*SK_{ICC\_2}$ mod q;

10. Falls s1 oder s2 gleich Null sind, wiederhole Schritte 1-10;

11. Ausgabe von #H2, s1, und s2 als Bestandteil der pseudonymen Signatur 124.

Die pseudonyme Signatur kann z.B. im Anschluss an die bereits ausgegebene Nachricht M nun ebenfalls ausgegeben und an den Empfänger der Nachricht M übermittelt werden. Zudem können die Werte ZQ1, das Pseudonym (z.B. $ID\text{-}SK_{ICC\_1}$ und/oder $ID\text{-}SK_{ICC\_2}$ oder davon abgeleitete Werte, die als Pseudonym dienen, z.B. ZA1 und/oder ZA2), $PK_{SECTOR}$, ID-DSI an den Empfänger übertragen werden. Diese Werte entsprechen den Datenwerten D1-D4 der Figur 2.

Bei den Werten $ID\text{-}SK_{ICC\_1}$ und $ID\text{-}SK_{ICC\_2}$ kann es sich jeweils um ein Pseudonym handeln, die vom Prozessor eines ID-Tokens anhand eines von den Terminals eines Sektors für alle ID-Token, die diesem Sektor angehören, bereitgestellten öffentlichen Sektorschlüssel berechnet wurde . Beispielsweise kann der Wert $ID\text{-}SK_{ICC\_1}$ mittels einer Schlüsselableitungsfunktion KA (z.B. Diffie-Hellman Verfahren) und dem öffentlichen Sektorschlüssel $PK_{SECTOR}$ des jeweiligen Sektors berechnet werden gemäß: $ID\text{-}SK_{ICC\_1} = KA(SK_{ICC\_1}, PK_{SECTOR})$. Die Funktion "KA" kann z.B. eine "key agreement function" (Schlüsselvereinbarungsfunktion) nach Diffie-Hellman sein. In analoger Weise kann $ID\text{-}SK_{ICC\_2}$ berechnet werden gemäß: $ID\text{-}SK_{ICC\_2} = KA(SK_{ICC\_2}, PK_{SECTOR})$. Auch die Zwischenwerte ZA1 und ZA2 können jeweils als weitere sektorspezifische Pseudonyme angesehen werden, welche es einem Terminal eines Sektors, für welchen die Linearzerlegung des privaten sektorspezifischen Schlüssels in die beiden statischen Schlüssel erfolgte, eine Identifikation des Sicherheitstokens erlaubt. $ID\text{-}SK_{ICC\_1}$ und $ID\text{-}SK_{ICC\_2}$ können z.B. als Pseudonyme, die sich aus einem "halben Diffie-Hellman" Schritt ergeben, berechnet werden, wie dies z.B. in TR-03110 Teil 2 S. 30 Fig. 5 dargestellt ist. Um diese Identifikation zu ermöglichen, werden nach Ausführungsformen die Zwischenwerte ZA1 und/oder ZA2 z.B. als weitere Datenwerte von dem Token auf das Terminal übertragen. Die Zwischenwerte ZA1 und ZA2 können als weitere sektorspezifische Pseudonyme angesehen werden, wenn diese zusätzlich an das Terminal übertragen werden. Je nach Ausführungsform kann also ein Identifikator ($ID\text{-}SK_{ICC\_1}$ und/oder $ID\text{-}SK_{ICC\_2}$) des ersten und/oder zweiten statische Schlüssels ($SK_{ICC\_1}$ und/oder $SK_{ICC\_2}$) oder ein davon abgeleiteter Wert als Pseudonym dienen. Beispielsweise können die ersten und/oder zweiten statischen Schlüssel und die entsprechenden Identifikatoren dynamisch durch den Prozessor des ID-Tokens bei jedem Signaturvorgang generiert werden (ein Tracking ist damit nicht möglich, die Identifikatoren bzw. deren abgeleitete Werte sind daher "pseudonym").

Falls das Terminal seine Berechtigung zur Identifizierung des Tokens dem Token gegenüber nachgewiesen hat, kann ein sektorspezifisches Pseudonym, das das Sicherheitstoken innerhalb eines Sektors eindeutig identifiziert, an das Terminal als weiterer Datenwert übertragen werden. Beispielsweise kann es sich bei dem Sektor um einen "Revozierungssektor" handeln und bei dem Terminal um ein zur Revozierungsterminal.. Der öffentliche sektorspezifische Schlüssel $PK_{SECTOR}$ kann in diesem Fall aus dem öffentlichen Revozierungs-Schlüssel $PK_{REVOCATION}$ bestehen.

Beispielsweise kann die erste ID (der erste Identifikator) "ID-$SK_{ICC\_1}$" den ersten statischen Schlüssel $SK_{ICC\_1}$ und eine zweite ID (zweiter Identifikator) "ID-$SK_{ICC\_2}$" den zweiten statischen Schlüssel $SK_{ICC\_2}$ des Sicherheitstokens gemäß TR-03110 Teil 2 Version 2.20 identifizieren. Nach Ausführungsformen kann ein Sicherheitstoken seinen ersten und/oder zweiten statischen, tokenindividuellen privaten Schlüssel dazu verwenden, um eine pseudonyme Signatur abzuleiten, die keinen Rückschluss auf die Identität des Sicherheitstokens zulässt, da in die Signatur beide Komponenten der Linearzerlegung, welche den ersten und zweiten statische Schlüssel generierte, eingehen.

Die Verifikation der pseudonymen Signatur kann von dem empfangenden Terminal nun wie folgt durchgeführt werden:

Zunächst berechnet das Terminal mit der gleichen Hashfunktion, die von dem Token zur Berechnung des ersten Hashwerts verwendet wurde, einen ersten Hashwert #H1' der empfangenen Nachricht M.

Durch Ausführung der Funktion PVerify verifiziert das Terminal die Integrität der Nachricht. Der Funktionsaufruf umfasst die folgenden Argumente: PVerify ($Q^{\wedge}$, $PK_{SECTOR}$, $PK_{ICC}$, ID-$SK_{ICC\_1}$, ID-$SK_{ICC\_2}$, ID-DSI, #H2, s1, s2);

Die Durchführung der Funktion PVerify umfasst folgende Schritte:

1. Berechnung eines Wertes ZQ1' mit Hilfe einer Schlüsselvereinbarungsfunktion KA gemäß $ZQ1=KA(\#H2, PK_{PICC})*KA(s1, b)*KA(s2, PK_M)$, wobei $PK_{PICC}$ der statische öffentliche Schlüssel des Sicherheitstokens ist;

2. Falls das Terminal zur individuellen Identifizierung des Tokens berechtigt ist, z.B. um eine Prüfung des Revozierungsstatus durchzuführen, Berechnung eines Wertes $ZA1'=KA(\#H2, ID\text{-}SK_{ICC\_1}) * KA(s1, PK_{SECTOR})$;

3. Falls das Terminal zur Revozierung des Sicherheitstokens und/oder zur individuellen Identifizierung des Tokens berechtigt ist, und falls zusätzlich oder alternativ zu der Identifizierung des Tokens mittels des ersten statischen privaten Schlüssels $SK_{ICC\_1}$ eine Identifizierung mittels des zweiten statischen privaten Schlüssels $SK_{ICC\_2}$ erfolgen soll, Berechnung eines Wertes $ZA2'=KA(\#H2, ID\text{-}SK_{ICC\_2}) * KA(s2, PK_{SECTOR})$;

4. Berechnung eines konkatenierten Werts K' gemäß K'=Konkatenierungsfunktion($ZQ1'|ID\text{-}SK_{ICC\_1}|ZA1'|ID\text{-}SK_{ICC\_2}|ZA2'|PK_{SECTOR}|ID\text{-}DSI)\#H1'$);

5. Berechnung eines zweiten Hashwerts #H2' gemäß #H2'=H(K'), wobei H die zweite Hashfunktion darstellt, die von dem Token zur Berechnung des zweiten Hashwerts #H2 verwendet wurde und die mit der ersten Hashfunktion identisch sein kann;

6. Bei Identität des in der Signatur 124 enthaltenen Hashwerts #H2 und des durch das Terminal berechneten Hashwerts #H2' gilt die pseudonyme Signatur als valide.

Die so generierte Signatur 214 beinhaltend die Werte s1, s2 und #H2 erlaubt keine Identifikation des Sicherheitstokens, da die Werte s1 und s2 von Zufallszahlen abgeleitet sind, und #H2 vom Inhalt der Nachricht M abhängt, sodass unerlaubtes Tracking durch den Betreiber der Terminals verhindert wird.

Falls es sich bei dem Terminal um ein Revozierungs-Terminal handelt, das sich gegenüber dem Sicherheitstoken erfolgreich als zur Identifizierung des Tokens berechtigt authentifiziert hat, wird der Identifikator ("ID-$SK_{ICC\_1/2}$") des ersten und/oder des zweiten statischen Schlüssels gemäß Ausführungsformen von dem Sicherheitstoken an das Revozierungs-Terminal übermittelt. Das Terminal hat Zugriff auf die Zuordnung der übermittelten Identifikatoren zu den einzelnen Token und ist mit einem Revozierungsserver operativ verbunden. Das Revozierungs-Terminal identifiziert anhand des bzw. der übermittelten Identifikatoren den dem Sicherheitstoken zugeordneten ersten und/oder zweiten privaten statischen Schlüssel $SK_{ICC\_1}$, $SK_{ICC\_2}$ und prüft, ob ein diesem Sicherheitstoken zugeordneter öffentlicher Schlüssel oder das Sicherheitstoken selbst in einer Revozierungsliste verzeichnet ist. In diesem Fall kann nach Ausführungsformen das Sicherheitstoken von dem Terminal vollständig invalidiert oder einbehalten werden und/oder die pseudonyme Signatur gilt als invalide und wird nicht an das Dienst-Computersystem weitergeleitet.

**Bezugszeichenliste**

| | |
|---|---|
| 101 | Nutzer |
| 102 | Sicherheitstoken |
| 104 | Datenspeicher |
| 106 | gespeicherte Attributwerte |
| 108 | Datenwerte D1-D4 |
| 110 | Hashfunktion |
| 111 | Logik zur dynamischen Attributwertberech- |

nung
112    Konkatenierungsfunktion
114    Funktion zur Generierung einer Signatur
116    Prozessor
118    RAM
119    Schnittstelle
120    Lesegerät
122    Nutzer-Computersystem
124    Datenspeicher
126    Prozessor
128    ID-Provider-Computersystem
130    Datenspeicher
132    Prozessor
134    Netzwerk
136    Attribut-Server
138    Datenspeicher
140    gespeicherte Attributwerte
142    Prozessor
144    Dienst-Computersystem
146    Datenspeicher
148    Prozessor
150    Dienst
T1-T7    Teile der Nachricht
t1-t7    Zeitpunkte der Bereitstellung der Teile
M    Nachricht
ZWF    Zwischenwertfunktion
AF    Abschlussfunktion
VDW    vorgespeicherter Datenwert für Hashfunktion 110
202-212    Zwischenwerte
#H1    erster Hashwert
#H2    zweiter Hashwert
D1-D4    Datenwerte
K    konkatenierter Wert
214    Signatur
302-312    Schritte
404-408    Nutzer
410-414    Sicherheitstoken
418    Revozierungs-Server
420-426    erster statischer privater kryptographischer Schlüssel
428    Terminal

**Patentansprüche**

1. Verfahren zur Generierung einer Signatur (214) für eine Nachricht (M) durch einen Prozessor (116) eines Sicherheitstokens (102), wobei das Verfahren umfasst:

- Sequentielles Bereitstellen (302) von Teilen (T1-T7) der Nachricht (M) durch den Prozessor (116);
- während der sequentiellen Bereitstellung, Anwenden (304) einer Zwischenwertfunktion (ZWF) oder einer Abschlussfunktion (AF) einer Hashfunktion (110) auf jedes der Teile der Nachricht unmittelbar nach der Bereitstellung des besagten Teils zur schrittweisen Berechnung eines ersten Hashwerts (#H1), wobei der erste Hashwert (#H1) identisch ist mit einem Wert, der bei Anwendung der Hashfunktion (110) auf die gesamte Nachricht (M) erhalten worden wäre, durch den Prozessor;
- Bereitstellen (306) von ein oder mehreren Datenwerten (D1-D4) durch den Prozessor;
- nach Berechnung des ersten Hashwertes (#H1), Generierung (308) eines konkatenierten Wertes (K) durch den Prozessor durch Konkatenierung der ein oder mehreren Datenwerte (D1-D4) und des berechneten ersten Hashwertes (#H1), wobei die Nachricht von der Konkatenierung ausgeschlossen wird;
- Anwenden (310) der Hashfunktion (110) oder einer weiteren Hashfunktion auf den konkatenierten Wert (K) zur Berechnung eines zweiten Hashwerts (#H2) durch den Prozessor;
- Ausgabe (312) des zweiten Hashwerts (#H2) durch den Prozessor zur Verwendung des zweiten Hashwerts als die Signatur (214) der Nachricht oder als ein Bestandteil dieser Signatur; ferner mit
- Freigabe von Arbeitsspeicher (118) des Sicherheitstokens, der durch jedes der Teile der Nachricht belegt wurde, unmittelbar nach der Anwendung der Zwischenwertfunktion oder der Abschlussfunktion auf diesen Teil der Nachricht; oder
- Freigabe von Arbeitsspeicher (118) des Sicherheitstokens, der durch jedes der Teile der Nachricht belegt wurde, nach der Anwendung der Zwischenwertfunktion oder der Abschlussfunktion auf diesen Teil der Nachricht und unmittelbar nachdem dieser Teil der Nachricht über eine Schnittstelle (119.1) des Sicherheitstokens ausgegeben wurde.

2. Verfahren nach Anspruch 1, wobei das Anwenden der Zwischenwertfunktion (ZWF) der Hashfunktion (110) oder der Abschlussfunktion (AF) der Hashfunktion (110) zur Berechnung des ersten Hashwerts umfasst:

- Anwenden der Zwischenwertfunktion (ZWF) auf einen ersten (T1) der bereitgestellten Teile der Nachricht, sobald dieser bereitgestellt wurde, um einen Zwischenwert (202) zu berechnen, in welchen dieser erste (T1) der Nachricht eingeht;
- Für jeden weiteren (T2-T6) der sequentiell bereitgestellten Teile der Nachricht, erneutes Anwenden der Zwischenwertfunktion (ZWF) auf den weiteren der bereitgestellten Teile der Nachricht, sobald dieser bereitgestellt wurde, um einen neuen Zwischenwert zu berechnen, wobei in die Berechnung des neuen Zwischenwerts (204-212) der Zwischenwert des vorigen Schritts (202-210) und der weitere bereitgestellte Teil (T2-T6) der Nachricht (M) eingeht, wobei auf den letzten bereitgestellten Teil (T7) der Nachricht die Abschlussfunktion anstatt der Zwischenfunktion angewendet wird; wobei das Anwenden der Abschlussfunktion (AF) auf den zuletzt bereitgestellten Teil (T7) der Nachricht und auf den zuletzt berechneten Zwischenwert (212) den ersten Hashwert (#H1) ergibt.

3. Verfahren nach einem der vorigen Ansprüche, ferner mit:

- Ausgabe jedes der bereitgestellten Teile der Nachricht (M) vor der Berechnung und/oder vor der Ausgabe des ersten Hashwerts (#H1) und/oder des zweiten Hashwerts (#H2) über eine Schnittstelle (119.1) des Sicherheitstokens; und
- Freigabe von Arbeitsspeicher des Sicherheitstokens, der durch die ausgegebenen Teile der Nachricht belegt wurden, unmittelbar nach Ausgabe des Teils der Nachricht.

4. Verfahren nach einem der vorigen Ansprüche, wobei es sich bei der Signatur (214) um eine Schnorr-Signatur handelt, und wobei die Generierung der Schnorr-Signatur umfasst:

- Vereinbarung von Domänenparametern zur Festlegung einer Gruppe G der Ordnung q=|G| zwischen dem Sicherheitstoken und einem Terminal, wobei q eine Primzahl ist, wobei die Domänenparameter einen Satz von Parametern darstellen, der eine Gruppe definiert;
wobei die für die Berechnung des zweiten Hashwertes (#H2) verwendete Hashfunktion (180) eine kryptographische Hashfunktion mit Wertebereich [0, q-1] ist;
- Generierung einer Zufallszahl x zur Verwendung als privater Schlüssel, wobei die Zufallszahl größer als Null und kleiner als die Primzahl q ist;
- Berechnung eines öffentlichen Schlüssels y mittels Skalarmultiplikation als ein dem privaten Schlüssel x entsprechendes Gruppenelement der Gruppe gemäß $y=g^x$, wobei g ein Generator der Gruppe ist und wobei der private und der öffentliche Schlüssel x, y ein asymmetrisches kryptographisches Schlüsselpaar bilden;
- Berechnung einer Zufallszahl k, wobei die Zufallszahl größer als Null und kleiner als die Ordnung q der Gruppe G ist;
- Berechnung eines Schnorrsignatur-Zwischenwertes r mittels Skalarmultiplikation unter Verwendung des Generators g und der Zufallszahl k gemäß der Formel $r=g^k$, wobei der Schnorrsignatur-Zwischenwert einer der Datenwerte (D1-D4) ist und in die Generierung des konkatenierten Wertes (K) eingeht;
- Berechnung eines Ergebniswertes (s) als der Summe aus der Zufallszahl k und dem Produkt aus dem privaten Schlüssel x und dem zweiten Hashwert (#H2) Modulo q;
- Verwenden des zweiten Hashwerts (#H2) und des Ergebniswerts (s) jeweils als Bestandteil der Signatur (214) der Nachricht (M).

5. Verfahren nach einem der vorigen Ansprüche, wobei die Datenwerte (D1-D4) ein oder mehrere der folgenden Werte beinhalten:

- Zwischenwerte eines Schlüsselaustauschverfahrens; und/oder
- einen öffentlichen Schlüssel (416), der einem Empfänger (120) eine Entschlüsselung der Nachricht (M) ermöglicht; und/oder
- eine Token-ID, insbesondere eine sektorspezifische Token-ID;
- ein sektorspezifisches Pseudonym einer Vielzahl von bei dem Sektor registrierten ID-Token; und/oder
- ID des anzuwendenden Signaturverfahrens oder Signaturverifikationsverfahrens.

6. Verfahren nach einem der vorigen Ansprüche, wobei die Teile der Nachricht (T1-T7) ein oder mehrere der folgenden Werte beinhalten:

- ein aus einem Speicher (104) des Sicherheitstokens ausgelesener Attributwert (T1, T2, T4, T7);
- ein durch den Prozessor von einem Attributserver (136) über ein Netzwerk (134) empfangener Attributwert (T5, T6);
- ein durch den Prozessor (116) dynamisch berechneter (111) Attributwert (T3);
- Name eines Nutzers (101), dem das Sicherheitstoken zugeordnet ist;
- Autorisierungsdaten eines Nutzers (101), dem das Sicherheitstoken zugeordnet ist.

7. Verfahren nach einem der vorigen Ansprüche, wobei es sich bei der Signatur um eine pseudonyme Signatur handelt.

8. Verfahren nach Anspruch 7, wobei das Sicherheitstoken eines aus einer Gruppe von Sicherheitstoken ist, wobei in jedem der Sicherheitstoken ein öffentlicher Schlüssel ($PK_{SECTOR}$) eines Terminals (428) oder eines Dienstanbieters gespeichert ist, wobei in jedem der Sicherheitstoken ein geheimer statischer Schlüssel ($SK_{ICC\_1}$) gespeichert ist welcher für jedes der Sicherheitstoken einen unterschiedlichen Wert aufweist, wobei jedes der Sicherheitstoken dazu ausgebildet ist, eine sektorspezifische Token-ID aus den in dem Sicherheitstoken gespeicherten geheimen statischen Schlüssel und dem öffentlicher Schlüssel ($PK_{SECTOR}$) abzuleiten, wobei die Signatur (214) eine nur auf die Identität der Gruppe der Sicherheitstoken verweisende pseudonyme Signatur ist, wobei das Verfahren umfasst:

- Authentifizierung des Terminals (428) gegenüber dem Sicherheitstoken;
- Im Falle einer erfolgreichen Authentifizierung des Terminals gegenüber dem Sicherheitstoken, Berechnung der sektorspezifischen Token-ID durch den Prozessor des Sicherheitstokens und Durchführung der Generierung der Nachricht und der Signatur;
- Übermittlung der generierten Nachricht (M), der berechneten sektorspezifischen Token-ID und der generierten Signatur (214) an das Terminal;
- Empfang der Nachricht (M), der sektorspezifischen Token-ID und der Signatur (214) durch das Terminal;
- Identifikation des Sicherheitstokens anhand der empfangenen sektorspezifischen Token-ID und anhand eines privaten Schlüssels ($SK_{SECTOR}$), der mit dem öffentlichen Schlüssel ($PK_{SECTOR}$) ein asymmetrisches kryptographisches Schlüsselpaar bildet, durch das Terminal und Prüfung, durch das Terminal, ob das identifizierte Sicherheitstoken in einer Revozierungsliste verzeichnet ist; und/oder
- Prüfung der Signatur der Nachricht durch das Terminal und/oder Weiterleitung der Nachricht und der Signatur von dem Terminal an ein Dienst-Computersystem um dem Dienst-Computersystem eine Prüfung der Integrität der Nachricht anhand der weitergeleiteten Signatur zu ermöglichen.

9. Verfahren nach einem der vorigen Ansprüche,

- wobei es sich bei der Nachricht (M) um mehrere Attributwerte handelt, wobei jedes der Attributwerte als eines der Teile (T1-T3) der Nachricht (M) fungiert,
- wobei die Bereitstellung zumindest eines ersten (T1) der Attributwerte ein Auslesen des ersten Attributwertes aus einem geschützten Speicher (104) des Sicherheitstokens beinhaltet; und/oder
- wobei die Bereitstellung zumindest eines zweiten (T2) der Attributwerte eine dynamische Berechnung (111) des zweiten Attributwertes durch den Prozessor (116) des Sicherheitstokens beinhaltet; und/oder
- wobei die Bereitstellung zumindest eines dritten (T3) der Attributwerte einen Empfang des dritten Attributwertes (140) von einem Attributserver (136) über ein Netzwerk (134) durch den Prozessor des Sicherheitstokens und eine Verfügbarmachung des empfangenen dritten Attributwertes über den Prozessor (116) beinhaltet.

10. Verfahren nach Anspruch 9, wobei es sich bei dem Sicherheitstoken um ein Identitätsdokument handelt, das einem Nutzer (101) zugeordnet ist, ferner umfassend:

- Authentifizierung des Nutzers gegenüber dem Sicherheitstoken;
- Authentifizierung eines ID-Provider-Computersystems (128) gegenüber dem Sicherheitstoken,
- nach erfolgreicher Authentifizierung des Nutzers und des ID-Provider-Computersystems gegenüber dem Sicherheitstoken, Übertragung von einem oder mehreren der von dem Prozessor des Sicherheitstokens bereitgestellten Attributwerte (106, 140, 111, T1-T7) als Bestandteil der Nachricht (M) durch den Prozessor (116) an das ID-Provider-Computersystem zur Weiterleitung der Nachricht an ein Dienst-Computersystem (144).

11. Verfahren nach Anspruch 9 oder 10, ferner umfassend:

- Authentifizierung des Nutzers (101) gegenüber dem Sicherheitstoken;
- Authentifizierung eines ID-Provider-Computersystems gegenüber dem Sicherheitstoken;
- nach erfolgreicher Authentifizierung des Nutzers und des ID-Provider-Computersystems gegenüber dem Sicherheitstoken, Feststellung durch das ID-Provider-Computersystem, dass zumindest einer (T3) der Attributwerte, die von dem ID-Provider-Computersystem angefordert werden, in dem Sicherheitstoken nicht gespeichert ist und nicht berechnet werden kann;
- im Falle der Feststellung, Veranlassung eines Attribut-Servers (136) durch das ID-Provider-Computersystem, sich gegenüber dem Sicherheitstoken (102) zu authentifizieren;
- Authentifizierung des Attribut-Servers gegenüber dem Sicherheitstoken;
- nach erfolgreicher Authentifizierung des Attribut-Servers gegenüber dem Sicherheitstoken, Übertragung des dritten Attributwerts (T3) von dem Attribut-Server an das Sicherheitstoken zur Speicherung des dritten Attributwertes durch den Prozessor (116) des Sicherheitstokens in einem geschützten Speicher (104) des Sicherheitstokens und/oder zur Bereitstellung des übertragenen dritten Attributwertes als Bestandteil der Nachricht (M) durch den Prozessor (116) an das Dienst-Computersystem.

12. Sicherheitstoken (102) umfassend einen Prozessor (116), wobei das Sicherheitstoken dazu konfiguriert ist, ein Verfahren nach einem der vorigen Ansprüche alleine oder in Interoperation mit einem Nutzer (101), einem Terminal (428), einem ID-Provider-Computersystem (128) und/oder einem Attribut-Server (136) auszuführen.

**Claims**

1. A method for generating a signature (214) for a message (M) by a processor (116) of a security token (102), wherein the method comprises the steps of:

    - providing () parts (T1-T7) of the message (M) sequentially by the processor (116);
    - whilst said parts of the message are being provided sequentially, applying (304), by the processor, an intermediate value function (ZWF) or a termination function 302(AF) of a hash function (110) to each of the parts of the message directly after said part has been provided so as to calculate a first hash value (#H1) step by step, wherein the first hash value (#H1) is identical to a value that would have been obtained if the hash function (110) had been applied to the entire message (M);
    - providing (306) one or more data values (D1-D4) by the processor;
    - once the first hash value (#H1) has been calculated, generating (308) a concatenated value (K) by the processor by concatenating the one or more data values (D1-D4) and the calculated first hash value (#H1), wherein the message is excluded from the concatenation;
    - applying (310), by the processor, the hash function (110) or a further hash function to the concatenated value (K) to calculate a second hash value (#H2);
    - outputting (312) the second hash value (#H2) by the processor to use the second hash value as the signature (214) of the message or as part of this signature;

    and also comprises the step of:

    - freeing main memory (118) of the security token that was occupied by each of the parts of the message, directly following the application of the intermediate value function or the termination function to this part of the message; or
    - freeing main memory (118) of the security token that was occupied by each of the parts of the message, following the application of the intermediate value function or the termination function to this part of the message and directly after this part of the message has been output via an interface (119.1) of the security token.

2. The method according to claim 1, wherein the application of the intermediate value function (ZWF) of the hash function (110) or of the termination function (AF) of the hash function (110) to calculate the first hash value comprises the steps of:

    - applying the intermediate value function (ZWF) to a first (T1) of the provided parts of the message as soon as this has been provided, in order to calculate an intermediate value (202) including this first (T1) part of the message;
    - for each further (T2-T6) of the parts of the message provided sequentially, reapplying the intermediate value function (ZWF) to the further of the provided parts of the message as soon as this has been provided in order to calculate a new intermediate value, wherein the calculation of the new intermediate value (204-212) includes the intermediate value of the previous step (202-210) and the further provided part (T2-T6) of the message (M), wherein, instead of the intermediate function, the termination function is applied to the last provided part (T7) of the message; wherein applying the termination function (AF) to the last-provided part (T7) of the message and to the last-calculated intermediate value (212) gives the first hash value (#H1).

3. The method according to one of the preceding claims, further comprising the step of:

    - outputting each of the provided parts of the message (M) prior to the calculation and/or prior to the output of the first hash value (#H1) and/or of the second hash value (#H2) via an interface (119.1) of the security token; and
    - freeing main memory of the security token that was occupied by the output parts of the message, directly after the part of the message has been output.

4. The method according to one of the preceding claims, wherein the signature (214) is a Schnorr signature, and wherein the generation of the Schnorr signature comprises the steps of:

    - agreeing domain parameters for determining a group G of the order q=|G| between the security token and a terminal, wherein q is a prime number, wherein the domain parameters represent a set of parameters defined by a group; wherein the hash function (180) used for the calculation of the second hash value (#H2) is a cryptographic hash function with value range [0, q-1];

- generating a random number x for use as a private key, wherein the random number is greater than zero and smaller than the prime number q;

- calculating a public key y by means of scalar multiplication as a group element of the group, said group element corresponding to the private key x, according to $y=g^x$, wherein g is a generator of the group, and wherein the private and the public key x, y form an asymmetric cryptographic key pair;

- calculating a random number k, wherein the random number is greater than zero and smaller than the order q of the group G;

- calculating a Schnorr signature intermediate value r by means of scalar multiplication with use of the generator g and the random number k according to the formula $r=g^k$, wherein the Schnorr signature intermediate value is one of the data values (D1-D4) and is included in the generation of the concatenated value (K);

- calculating a result value (s) as the sum of the random number k and the product of the private key x and the second hash value (#H2) modulo q;

- using the second hash value (#H2) and the result value (s) in each case as part of the signature (214) of the message (M).

5. The method according to one of the preceding claims, wherein the data values (D1-D4) contain one or more of the following values:

    - intermediate values of a key exchange method; and/or
    - a public key (416), which allows a receiver (120) to decrypt the message (M); and/or
    - a token ID, in particular a sector-specific token ID;
    - a sector-specific pseudonym of a plurality of ID tokens registered for the sector; and/or
    - ID of the signature method or signature verification method to be used.

6. The method according to one of the preceding claims, wherein the parts of the message (T1-T7) include one or more of the following values:

    - an attribute value (T1, T2, T4, T7) read from a memory (104) of the security token;
    - an attribute value (T5, T6) received by the processor from an attribute server (136) via a network (134);
    - an attribute value (T3) dynamically calculated (111) by the processor (116);
    - name of a user (101) to whom the security token is assigned;
    - authorisation data of a user (101) to whom the security token is assigned.

7. The method according to one of the preceding claims, wherein the signature is a pseudonym signature.

8. The method according to claim 7, wherein the security token is one from a group of security tokens, wherein a public key ($PK_{SECTOR}$) of a terminal (428) or of a service provider is stored in each of the security tokens, wherein a secret static key ($SK_{ICC\_1}$) is stored in each of the security tokens and has a different value for each of the security tokens, wherein each of the security tokens is designed to derive a sector-specific token ID from the secret static key stored in the security token and from the public key ($PK_{SECTOR}$), wherein the signature (214) is a pseudonym signature referring only to the identity of the group of security tokens, wherein the method comprises the steps of:

    - authenticating the terminal (428) to the security token;
    - in the event of a successful authentication of the terminal to the security token, calculating the sector-specific token ID by the processor of the security token and generating the message and the signature;
    - transmitting the generated message (M), the calculated sector-specific token ID and the generated signature (214) to the terminal;
    - receiving the message (M), the sector-specific token ID and the signature (214) by the terminal;
    - identifying, by the terminal, the security token on the basis of the received sector-specific token ID and on the basis of a private key ($SK_{SECTOR}$), which together with the public key ($PK_{SECTOR}$) forms an asymmetric cryptographic key pair, and checking, by the terminal, whether the identified security token is listed in a revocation list; and/or
    - checking the signature of the message by the terminal and/or forwarding the message and the signature from the terminal to a service computer system in order to allow the service computer system to check the integrity of the message on the basis of the forwarded signature.

9. The method according to one of the preceding claims,

    - wherein the message (M) is formed by a plurality of attribute values, wherein each of the attribute values functions as one of the parts (T1-T3) of the message (M),
    - wherein providing at least a first (T1) of the attribute values includes reading the first attribute value from a protected memory (104) of the security token; and/or

- wherein providing at least a second (T2) of the attribute values includes dynamically calculating (111) the second attribute value by the processor (116) of the security token; and/or

- wherein providing at least a third (T3) of the attribute values includes receiving the third attribute value (140) from an attribute server (136) via a network (134) by the processor of the security token and making available the received third attribute value via the processor (116).

10. The method according to claim 9, wherein the security token is an identity document which is assigned to a user (101), further comprising the steps of:

- authenticating the user to the security token;
- authenticating an ID provider computer system (128) to the security token,
- following successful authentication of the user and of the ID provider computer system to the security token, transmitting, by the processor (116), one or more of the attribute values (106, 140, 111, T1-T7) provided by the processor of the security token as part of the message (M) to the ID provider computer system to forward the message to a service computer system (144).

11. The method according to claim 9 or 10, further comprising the steps of:

- authenticating the user (101) to the security token;
- authenticating an ID provider computer system to the security token;
- following successful authentication of the user and of the ID provider computer system to the security token, determining by the ID provider computer system that at least one (T3) of the attribute values that are requested by the ID provider computer system is not stored in the security token and is unable to be calculated;
- in the event that this is determined, prompting an attribute server (136), by the ID provider computer system, to authenticate itself to the security token (102);
- authenticating the attribute server to the security token;
- following successful authentication of the attribute server to the security token, transmitting, by the processor (116) of the security token, the third attribute value (T3) from the attribute server to the security token to store the third attribute value in a protected memory (104) of the security token and/or to provide the transmitted third attribute value as part of the message (M) to the service computer system by the processor (116).

12. A security token (102) comprising a processor (116), wherein the security token is configured to perform a method according to one of the preceding claims alone or in interoperation with a user (101), a terminal (428), an ID provider computer system (128) and/or an attribute server (136).

**Revendications**

1. Procédé de génération d'une signature (214) pour un message (M) par un processeur (116) d'un jeton de sécurité (102), où le procédé comprend :

- la fourniture (302) séquentielle de parties (T1 à T7) du message (M) par le processeur (116) ;
- pendant la fourniture séquentielle, l'emploi (304) d'une fonction de valeur intermédiaire (ZWF) ou d'une fonction de terminaison (AF) d'une fonction de hachage (110) à chacune des parties du message immédiatement après la fourniture de ladite partie pour le calcul pas à pas d'une première valeur de hachage (#H1), où la première valeur de hachage (#H1) est identique à une valeur qui aurait été obtenue lors de l'emploi de la fonction de hachage (110) pour le message (M) entier, par le processeur ;
- la fourniture (306) d'une ou de plusieurs valeurs de données (D1 à D4) par le processeur ;
- après le calcul de la première valeur de hachage (#H1), la génération (308) d'une valeur concaténée (K) par le processeur par une concaténation de la valeur ou des valeurs de données (D1 à D4) et de la première valeur de hachage (#H1), où le message est exclu de la concaténation ;
- l'emploi (310) de la fonction de hachage (110) ou d'une autre fonction de hachage sur la valeur concaténée (K) pour le calcul d'une deuxième valeur de hachage (#H2) par le processeur ;
- la production (312) de la deuxième valeur de hachage (#H2) par le processeur pour l'utilisation de la deuxième valeur de hachage en tant que signature (214) du message ou en tant que composante de cette signature ;
en outre avec
- la libération de mémoires de travail (118) du jeton de sécurité, qui a été occupé par les parties de la mémoire immédiatement après l'emploi de la fonction de valeur intermédiaire ou de la fonction de terminaison à cette partie du message ; ou
- la libération de mémoires de travail (118) du jeton de sécurité, qui a été occupé par chacune des parties de la mémoire, après l'emploi de la fonction de valeur intermédiaire ou de la fonction de terminaison à cette partie du message et immédiatement après que cette partie du message a été produite par le biais d'une interface (119.1) du jeton de sécurité.

2. Procédé selon la revendication 1, dans lequel l'emploi de la fonction de valeur intermédiaire (ZWF) de la fonction de hachage (110) ou de la fonction de terminaison (AF) de la fonction de hachage (110) pour le calcul de la première valeur de hachage comprend :

- l'emploi de la fonction de valeur intermédiaire (ZWF) à une première (T1) des parties fournies du message dès que celle-ci a été fournie afin de calculer une valeur intermédiaire (202) dans laquelle cette première partie (T1) du message est comprise ;
- pour chaque partie (T2 à T6) suivante des parties du message fournies séquentiellement, un nouvel emploi de la fonction de valeur intermédiaire (ZWF) à la partie suivante des parties du message fournies dès que celle-ci a été fournie afin de calculer une nouvelle valeur intermédiaire, où, dans le calcul de la nouvelle valeur intermédiaire (204 à 212), la valeur intermédiaire de l'étape précédente (202 à 210) et la nouvelle partie (T2 à T6) fournie du message (M) est comprise, où, suite à la dernière partie (T7) fournie du message, on emploie la fonction de terminaison à la place de la fonction intermédiaire ; où l'emploi de la fonction de terminaison (AF) à la dernière partie (T7) fournie du message et à la dernière valeur intermédiaire (212) calculée donne la première valeur de hachage (#H1).

3. Procédé selon l'une des revendications précédentes, en outre avec :

- la production de chacune des parties fournies du message (M) avant le calcul, et/ou avant la production de la première valeur de hachage (#H1), et/ou de la deuxième valeur de hachage (#H2), par le biais d'une interface (119.1) du jeton de sécurité ; et
- la libération de mémoires de travail du jeton de sécurité qui ont été occupées par des parties du message produites immédiatement après la production de la partie du message.

4. Procédé selon l'une des revendications précédentes, dans lequel, dans le cas de la signature (214), il s'agit d'une signature de Schnorr, et dans lequel la génération de la signature de Schnorr comprend :

- l'accord de paramètre de domaines pour la désignation d'un groupe G d'ordre q = |G| entre le jeton de sécurité et un terminal, où q est un nombre primaire, où les paramètres de domaines représentent un ensemble de paramètres qui définissent un groupe ;
où la fonction de hachage (180) employée pour le calcul de la deuxième valeur de hachage (#H2) est une fonction cryptographique avec une plage de valeurs [0, q - 1] ;
- la génération d'un nombre aléatoire x pour l'emploi en tant que clé privée, où le nombre aléatoire est supérieur à zéro et inférieur au nombre primaire q ;
- le calcul d'une clé publique y au moyen d'une multiplication scalaire sous forme d'un élément de groupe correspondant à la clé privée x du groupe selon $y = g^x$, où g est un générateur du groupe et où les clés privée et publique x, y forment une paire de clés cryptographiques asymétriques ;
- le calcul d'un nombre aléatoire k, où le nombre aléatoire est supérieur à zéro et inférieur à l'ordre q du groupe G ;
- le calcul d'une valeur intermédiaire de signature de Schnorr r au moyen d'une multiplication scalaire moyennant l'emploi du générateur g et du nombre aléatoire k selon la formule $r = g^k$, où la valeur intermédiaire de signature de Schnorr est une des valeurs de données (D1 à D4) et est impliquée dans la génération de la valeur concaténée (K) ;
- le calcul d'une valeur résultante (s) sous la forme de la somme du nombre aléatoire k et du produit de la clé privée x et de la deuxième valeur de hachage (#H2) modulo q ;
- l'emploi de la deuxième valeur de hachage (#H2) et de la valeur résultante (s) respectivement en tant que composantes de la signature (214) du message (M).

5. Procédé selon l'une des revendications précédentes, dans lequel les valeurs de données (D1 à D4) contiennent une ou plusieurs parmi les valeurs suivantes :

- des valeurs intermédiaires d'un procédé d'échange de clés ; et/ou
- une clé publique (416) qui permet à un récepteur (120) de faire un décryptage du message (M) ; et/ou
- un jeton d'ID, en particulier, un jeton d'ID spécifique à un secteur ;
- un pseudonyme spécifique à un secteur d'un grand nombre de jetons d'ID enregistrés chez le secteur ; et/ou
- l'ID du procédé de signature à employer ou du procédé de vérification de la signature.

6. Procédé selon l'une des revendications précédentes, dans lequel les parties du message (T1 à T7) contiennent une ou plusieurs parmi les valeurs suivantes :

- une valeur d'attribut (T1, T2, T4, T7) lue à partir de la mémoire (104) du jeton de sécurité ;
- une valeur d'attribut (T5, T6) reçue par le processeur à partir d'un serveur d'attributs (136) par le biais d'un réseau (134) ;
- une valeur d'attribut (T3) calculée de manière dynamique par le processeur (116) ;
- le nom d'un utilisateur (101) auquel est associé le jeton de sécurité ;
- des données d'autorisation d'un utilisateur (101) auquel est associé le jeton de sécurité.

7. Procédé selon l'une des revendications précédentes, dans lequel, dans le cas de la signature, il s'agit d'une signature par pseudonyme.

8. Procédé selon la revendication 7, dans lequel le jeton de sécurité est un jeton d'une groupe de jetons de sécurité, où, une clé publique ($PK_{secteur}$) d'un terminal (428) ou d'un prestataire de service est stockée dans chacun des jetons de sécurité, où, dans chacun des jetons de sécurité, est stockée une clé privée statique ($SK_{ICC\_1}$), laquelle présente une valeur différente pour chacun des jetons de sécurité, où chacun des jetons de sécurité est conçu pour dériver une ID de jeton spécifique à un secteur à partir de la clé privée statique stockée dans le jeton de sécurité et de la clé publique ($PK_{secteur}$), où la signature (214) est une signature par pseudonyme renseignant uniquement l'identité du groupe des jetons de sécurité, où le procédé comprend :

- l'authentification du terminal (428) vis-à-vis du jeton de sécurité ;
- dans le cas d'une authentification réussie du terminal vis-à-vis du jeton de sécurité, le calcul d'une ID de jeton spécifique au secteur par le processeur du jeton de sécurité et l'exécution de la génération du message et de la signature ;
- la transmission du message (M) généré, de l'ID de jeton spécifique au secteur calculée et de la signature (214) générée au terminal ;
- la réception du message (M) de l'ID de jeton spécifique au secteur et de la signature (214) par le terminal ;
- l'identification du jeton de sécurité à l'aide de l'ID de jeton spécifique au secteur reçue et à l'aide d'une clé privée ($SK_{secteur}$) qui forme une paire de clés cryptographiques asymétrique avec la clé publique ($PK_{secteur}$), par le terminal, et la vérification, par le terminal si le jeton de sécurité identifié est enregistré dans une liste de révocation ; et/ou
- la vérification de la signature du message par le terminal et/ou la retransmission du message et de la signature du terminal à un système informatique de service afin de permettre au système informatique de service d'effectuer une vérification de l'intégrité du message à l'aide de la signature retransmise.

9. Procédé selon l'une des revendications précédentes,

- dans lequel, dans le cas du message (M), il s'agit de plusieurs valeurs d'attributs, où chacune des valeurs d'attribut fonctionne comme une des parties (T1 à T3) du message (M),
- dans lequel la fourniture d'au moins une première (T1) des valeurs d'attributs contient une lecture de la première valeur d'attribut à partir d'une mémoire sécurisée (104) du jeton de sécurité ; et/ou
- dans lequel la fourniture d'au moins une deuxième (T2) des valeurs d'attributs contient un calcul dynamique (111) de la deuxième valeur d'attribut par le processeur (116) du jeton de sécurité ; et/ou
- dans lequel la fourniture d'au moins une troisième (T3) des valeurs d'attributs contient une réception de la troisième valeur d'attribut (140) par un serveur d'attributs (136) par le biais d'un réseau (134) par le processeur du jeton de sécurité et un accord de disponibilité de la troisième valeur d'attribut reçue par le biais du processeur (116).

10. Procédé selon la revendication 9, dans lequel, dans le cas du jeton de sécurité, il s'agit d'un document d'identité qui est associé à un utilisateur (101), comprenant en outre :

- l'authentification de l'utilisateur vis-à-vis du jeton de sécurité ;
- l'authentification d'un système informatique fournisseur d'ID vis-à-vis du jeton de sécurité ;
- après l'authentification réussie de l'utilisateur et du système informatique fournisseur d'ID vis-à-vis du jeton d'identification, la transmission d'une ou de plusieurs valeurs d'attributs (106, 140, 111, T1 à T7) fournies par le processeur du jeton de sécurité sous forme de composantes du message (M) par le processeur (116) au système informatique fournisseur d'ID pour la retransmission du message à un système informatique de service (144).

11. Procédé selon la revendication 9 ou la revendication 10, comprenant en outre :

- l'authentification de l'utilisateur (101) vis-à-vis du jeton de sécurité ;

- l'authentification d'un système informatique fournisseur d'ID (128) vis-à-vis du jeton de sécurité ;

- après l'authentification réussie de l'utilisateur et du système informatique fournisseur d'ID vis-à-vis du jeton d'identification, le constat, par le système informatique fournisseur d'ID, qu'au moins une (T3) des valeurs d'attributs qui ont été demandées par le système informatique fournisseur d'ID n'est pas stockée dans le jeton de sécurité et ne peut pas être calculée ;

- dans le cas du constat, l'incitation d'un serveur d'attributs (136), par le système informatique fournisseur d'ID, pour qu'il s'identifie vis-à-vis du jeton de sécurité (102) ;

- l'authentification du serveur d'attributs vis-à-vis du jeton de sécurité ;

- après l'authentification réussie du serveur d'attributs vis-à-vis du jeton de sécurité, la transmission de la troisième valeur d'attribut (T3) du serveur d'attributs au jeton de sécurité pour le stockage de la troisième valeur d'attribut par le processeur (116) du jeton de sécurité dans une mémoire sécurisée (104) du jeton de sécurité, et/ou pour la fourniture de la troisième valeur d'attribut transmise en tant que composante du message (M) par le processeur (116) au système informatique de service.

12. Jeton de sécurité (102) comprenant un processeur (116), où le jeton de sécurité est conçu pour exécuter un procédé selon l'une des revendications précédentes, seul ou en inter opération avec un utilisateur (101), un terminal (428), un système informatique fournisseur d'ID (128) et/ou un serveur d'attributs (136).

**FIG. 1**

# EP 3 182 318 B1

Zeit →

Attributquellen

**106** **106** **111** **106** **140** **140** **106**

| T1 | T2 | T3 | T4 | T5 | T6 | T7 |

Nachricht M

Hashfunktion **110**

ZWF()! ZWF()! ZWF()! ZWF()! ZWF()! ZWF()! AF()!

**202**

**VDW**

**204**

*DEL: 202!*

**206**

*DEL: 204!*

**208**

*DEL: 206!*

**210**

*DEL: 208!*

**212**

*DEL: 210!*

**#H1**

*DEL: 212!*

1. Hashwert #H1

Ausgabe T1
Ausgabe T2
Ausgabe T3
Ausgabe T4
Ausgabe T5
Ausgabe T6
Ausgabe T7/M

Datenwerte

| D1 | | D2 | | D3 | | D4 |

K

Konkatenierter Wert

| D1 | D2 | #H1 | D3 | D4 |

Hash()! Hashfunktion **180**

2. Hashwert #H2

| #H2 |

Signatur

Signatur **214**

| #H2 |

## FIG. 2

26

Sequentielles Bereitstellen von Teilen der Nachricht ⌐304

Während der sequentiellen Bereitstellung, Anwenden einer Zwischenwertfunktion oder einer Abschlussfunktion einer Hashfunktion auf jedes der Teile der Nachricht unmittelbar nach der Bereitstellung des besagten Teils zur schrittweisen Berechnung eines ersten Hashwerts der vollständig bereitgestellten Nachricht

⌐302

Bereitstellen von ein oder mehreren Datenwerten ⌐306

Nach Berechnung des ersten Hashwertes für die vollständig bereitgestellte Nachricht, Generierung eines konkatenierten Wertes durch Konkatenierung der ein oder mehreren Datenwerte und des berechneten ersten Hashwertes unter Ausschluss der Nachricht

⌐308

Anwenden der Hashfunktion oder einer weiteren Hashfunktion auf den konkatenierten Wert zur Berechnung eines zweiten Hashwerts ⌐310

Ausgabe des zweiten Hashwerts zur Verwendung des zweiten Hashwerts als Signatur der Nachricht oder als Bestandteil dieser Signatur ⌐312

## FIG. 3

101  404  406  408

102  410  412  414

420  422  424  426

Pseud.Sign.  PK_REVOCATION

Dienst-CS
144

Terminal  428

Pseud.Sign.

Lesegerät 120

416

Revozierungs-Info

Revozierungs-Server
418

## FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011006864 A2

**In der Beschreibung aufgeführte Nicht-Patentliteratur**

- Advanced Security Mechanisms for Machine Readable Travel Documents and eIDAS Token. *Part 3 - Common Specifications Version 2.20,* 03. Februar 2015, https://www.bsi.bund.de/SharedDocs/Downloads/EN/BSI/Publications/TechGuidelines/TR03110/BSI_TR-03110_Part-3-V2_2.pdf?_blob=publicationFile&v=1
- *Advanced Security Mechanisms for Machine Readable Travel Documents and eIDAS Token - Part 2,* 16. Dezember 2014, https://www.bsi.bund.de/EN/Publications/Technical-Guidelines/TR03110/BSITR0311 0.html
- SHA-2. 09. Dezember 2005
- *Elliptic Curve Cryptography,* 28. Juni 2012, https://www.bsi.bund.de/SharedDocs/Downloads/EN/BSI/Publications/TechGuidelines/TR03111/BSI-TR-03111_pdf.pdf;jsessionid=BEA61004DB0EB5998B41DA8DE81999EA.2_cid360?_ blob=publicationFile&v=1